(19) **Europäisches Patentamt**
**European Patent Office**
**Office européen des brevets**

(11) **EP 3 778 112 B1**

(12) **EUROPEAN PATENT SPECIFICATION**

(45) Date of publication and mention
of the grant of the patent:
**13.07.2022 Bulletin 2022/28**

(21) Application number: **18913159.2**

(22) Date of filing: **28.03.2018**

(51) International Patent Classification (IPC):
**B23K 35/40** (2006.01)    **B23K 35/368** (2006.01)
**C22C 38/00** (2006.01)    **C22C 38/04** (2006.01)
**C22C 38/12** (2006.01)    **B23K 35/02** (2006.01)
**B23K 35/30** (2006.01)    **B23K 35/36** (2006.01)
**C21D 9/50** (2006.01)

(52) Cooperative Patent Classification (CPC):
**B23K 35/0266; B23K 35/3073; B23K 35/3606;**
**B23K 35/368; B23K 35/40; B23K 35/406;**
**C21D 9/50; C22C 38/04; C22C 38/12;** C22C 38/00

(86) International application number:
**PCT/JP2018/012912**

(87) International publication number:
**WO 2019/186811 (03.10.2019 Gazette 2019/40)**

(54) **METHOD FOR MANUFACTURING FLUX-CORED WIRE, FLUX-CORED WIRE AND METHOD FOR MANUFACTURING WELDED JOINT**

VERFAHREN ZUR HERSTELLUNG EINES FÜLLDRAHTS, FÜLLDRAHT UND VERFAHREN ZUR HERSTELLUNG EINER SCHWEISSVERBINDUNG

PROCÉDÉ DE FABRICATION DE FIL FOURRÉ, FIL FOURRÉ ET PROCÉDÉ DE FABRICATION D'UN JOINT SOUDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietor: **NIPPON STEEL CORPORATION**
**Chiyoda-ku**
**Tokyo 100-8071 (JP)**

(72) Inventors:
• **HASHIBA, Yuji**
**Tokyo 100-8071 (JP)**
• **SASAKI, Kiyohito**
**Tokyo 135-0016 (JP)**
• **SAKABAYASHI, Naoki**
**Tokyo 135-0016 (JP)**
• **TORIYABE Masaaki**
**Tokyo 135-0016 (JP)**

(74) Representative: **Vossius & Partner**
**Patentanwälte Rechtsanwälte mbB**
**Siebertstrasse 3**
**81675 München (DE)**

(56) References cited:
CN-C- 100 515 655    JP-A- S58 199 693
JP-A- 2011 020 154    JP-A- 2011 020 154
JP-A- 2011 025 298    JP-A- 2013 226 577
JP-A- 2013 226 577    JP-A- 2018 047 486

**Description**

[Technical Field of the Invention]

The present invention relates to a method of manufacturing a flux-cored wire, a flux-cored wire, and a method of manufacturing a welded joint.

[Related Art]

Anti-weathering steel which is exposed to atmospheric corrosion environments by being used for a long period of time generally has a protective rust layer formed on a surface thereof. The rust layer shields the corrosion-resistant steel from corrosive substances from the outside to inhibit the corrosion of the anti-weathering steel after the formation of the rust layer, and thus the weather resistance of the steel is exhibited. For this reason, anti-weathering steel is used for structures such as bridges as steel which can be used as a bare material without coating.

However, in a high floating salinity environment such as a seaside area or an area where a snow melting agent is sprayed, it is difficult to form a protective rust layer on a surface of anti-weathering steel, and the corrosion inhibition effect is hardly exhibited. Therefore, in these areas, it is impossible to use anti-weathering steel as it is as a bare material, and it is necessary to perform coating thereon.

Furthermore, in the above-described high floating salinity environment, coating film damages are generated by deterioration in the coating film, and the steel immediately under the coating film damage portion is directly exposed to the corrosion environment. Accordingly, the coated steel corrodes such that the coating film swells like a hump around the damage portion. With the progress of such corrosion, the coating film damage portion is further expanded and the structure thus continuously corrodes. Accordingly, in a high floating salinity environment, the coated steel is recoated about every ten years in many cases in order to prolong the life of the structure. Since such a repair process involves a large number of steps, several technical proposals have been made on corrosion-resistant steel allowing a reduction in the maintenance cost with a prolonged coating life and a substantially extended repair coating interval.

For example, Patent Document 1 (Japanese Unexamined Patent Application, First Publication No. 2008-163374) discloses steel for bridges which has excellent weather resistance and coating delamination resistance and can be used as a minimum maintenance material even in a high floating salinity environment such as a seaside area or an area where snow-melting salt is sprayed.

Patent Document 2 (Japanese Unexamined Patent Application, First Publication No. 2007-262555) discloses corrosion-resistant steel for the hold of a coal/ore carrying vessel, which can prolong the life of a coating film and inhibit the corrosion after delamination even in a corrosion environment in which the coating film is easily damaged mechanically and easily affected by both $SO_4^{2-}$ and $Cl^-$.

Furthermore, in addition to the corrosion resistance of steel itself, it is also required to impart excellent weather resistance and coating corrosion resistance to a weld metal in a case where anti-weathering steel or corrosion-resistant steel is welded as disclosed in the above-described Patent Documents 1 and 2.

Particularly, the excess weld metal has a problem in weather resistance and coating corrosion resistance in a welded joint. The excess weld metal is the outermost layer of the weld metal, and while the welded joint is used, the coating film applied to the area of the excess weld metal is relatively more likely to receive severe collision and mechanical friction with other objects than a surface of the coating film applied to the surrounding smooth parent material. In addition, since the excess weld metal itself has a complicated convex shape, the coating film of the excess weld metal tends to be thinner than the coating film of the surrounding parent material in the coating process. For these reasons, the coating film easily peels off from the surface of the excess weld metal, and thus the surface of the excess weld metal is likely to become the starting point of corrosion in which the coating film destruction progressively progresses at an early stage from the start of use of the steel structure.

Therefore, imparting excellent weather resistance and coating corrosion resistance equal to or greater than those of the parent material to the weld metal of the joint is very important and ensures the weather resistance and coating corrosion resistance of the entire structure, and a welding material for realizing the above is required.

Patent Document 3 (Japanese Unexamined Patent Application, First Publication No. 2013-151001) discloses, as a flux-cored wire for gas shield arc welding for anti-weathering steel, a flux-cored wire for gas shield arc welding for anti-weathering steel which can provide a weld metal having good welding workability in all position welding during welding of anti-weathering steel, and in strength and toughness.

Furthermore, Patent Document 4 (Japanese Unexamined Patent Application, First Publication No. 2000-288781) discloses a flux-cored wire for gas shield arc welding which is suitable for welding of Cu-Ni-based seaside anti-weathering steel, can be subjected to all position welding, obtains good welding workability, and imparts, to a weld metal, corrosion resistance to flying sea salt particles without damaging the corrosion resistance of a parent material.

However, even in the weld metal obtained by the technologies described in Patent Documents 3 and 4, delamination easily occurred, and thus there was a problem in that the delaminated portion becomes the starting point of corrosion in a high floating salinity environment. This is because the coating film applied to the excess weld metal as the outermost layer of a welded joint tends to be thinner than the coating film applied to the surrounding flat parent material due to the complicated convex shape of the excess weld metal. A further fluxed-cored wire for gas-shielded arc weldings is disclosed in Patent Document 5.

[Prior Art Document]

[Patent Document]

[Patent Document 1] Japanese Unexamined Patent Application, First Publication No. 2008-163374
[Patent Document 2] Japanese Unexamined Patent Application, First Publication No. 2007-262555
[Patent Document 3] Japanese Unexamined Patent Application, First Publication No. 2013-151001
[Patent Document 4] Japanese Unexamined Patent Application, First Publication No. 2000-288781
[Patent Document 5] Japanese Unexamined Patent Application, First Publication No. 2013-226577

[Disclosure of the Invention]

[Problems to be Solved by the Invention]

In view of the circumstances, an object of the invention is to provide a method of manufacturing a flux-cored wire which can provide a welded joint having a weld metal having excellent weather resistance, coating delamination resistance, and mechanical properties even in an environment which contains a large amount of corrosive substances due to a large amount of flying salt or the like, and has good welding workability in all position welding, a flux-cored wire, and a method of manufacturing a welded joint.

[Means for Solving the Problem]

The invention is defined in the claims.

[Effects of the Invention]

According to a flux-cored wire which is obtained by a method of manufacturing the invention and a method of manufacturing a welded joint using the flux-cored wire, it is possible to obtain a weld metal having excellent weather resistance and coating delamination resistance even in a high floating salinity environment such as a seaside area. Accordingly, it is possible to suppress the progress of corrosion due to enlargement of delamination starting from a weld part, a period up to a recoating step for prolonging the life of a structure is prolonged, and thus it is possible to reduce the maintenance cost. In addition, according to a flux-cored wire which is obtained by a method of manufacturing the invention and a method of manufacturing a welded joint using the flux-cored wire, it is possible to provide a high-quality weld part which has good welding workability in all position welding and excellent mechanical properties without welding defects.

[Brief Description of the Drawings]

FIG. 1 is a diagram showing a position of a sample for a corrosion test piece for evaluating corrosion resistance of a weld part.
FIG. 2 is a diagram schematically showing the shape of a corrosion test piece for evaluating coating corrosion resistance of a weld part, and a cross cut.
FIG. 3 is a diagram schematically showing a corrosion test method (SAE J2334 test, conditions per cycle).
FIG. 4 is a cross-sectional view of a flux-cored wire in a manufacturing stage.
FIG. 5 is a cross-sectional view of a flux-cored wire manufactured by caulking.
FIG. 6 is a cross-sectional view of a flux-cored wire manufactured by welding.

[Embodiments of the Invention]

In order to solve the problems, the inventors have conducted various intensive studies to find a desirable chemical composition (hereinafter, may be referred to as "components") of a flux-cored wire (hereinafter, may be abbreviated as "wire"), and as a result, found that in order to obtain a welded joint having excellent weather resistance and coating corrosion resistance, it is effective to allow the wire to contain Sn as an alloy composition such that Sn (tin) is contained in a weld metal. The inventors have also found that by allowing the wire to contain Cu in addition to Sn, a weld metal and a welded joint having more excellent weather resistance and coating corrosion resistance can be obtained.

Furthermore, the inventors have found that by allowing the wire to contain a Ti oxide, a Si oxide, a Zr oxide, a Na compound, a K compound, and a fluorine compound as slag compositions within a predetermined range, welding workability is improved in all position welding. The inventors have also found that by allowing the wire to contain Al and an Al oxide (for example, $Al_2O_3$) within a predetermined range, welding workability in vertical upward welding and overhead position welding is improved. In addition, the inventors have found that by allowing the wire to contain Bi as an alloy composition within a predetermined range, the ease of delamination of slag (slag delamination) produced on a weld bead surface is further improved.

In addition, the inventors have found that by allowing the wire to contain C, Si, Mn, and Mg as alloy compositions within a predetermined range, a proper range of strength and good toughness can be imported to a weld metal. The inventors have found that by allowing the wire to contain Ni, Ti, and B as alloy compositions within a predetermined range, the low temperature toughness of a weld metal is improved. Furthermore, the inventors have found that by allowing the wire to contain Mo as an alloy composition within a predetermined range, a high strength weld metal can be obtained.

However, the inventors have found that it is also required to consider the interaction between the above-described elements. Specifically, the inventors have found that in a case where the content ratio between Sn (and Sb) and Mo and W as alloy compositions is not within a predetermined range, especially in a high floating salinity environment, it is difficult to prevent the corrosion depth immediately under a coating film damage portion from being increased in a case where coating film damages are generated by the above-described deterioration in the coating film, and the coating delamination resistance is lowered.

A method of manufacturing a flux-cored wire according to an aspect of the invention obtained based on the above-described findings will be described below. In the following description, the unit "%" for the chemical composition (component) means the mass% with respect to the total mass of the flux-cored wire (total mass of a steel sheath and a flux) unless otherwise specified. Here, the total mass of the flux-cored wire is the total mass of the steel sheath and the flux, and in a case where the surface of the steel sheath is plated, the mass of the plating is included in the mass of the steel sheath. However, the mass of a lubricant applied to the outer surface of the steel sheath is not included in the total mass of the flux-cored wire.

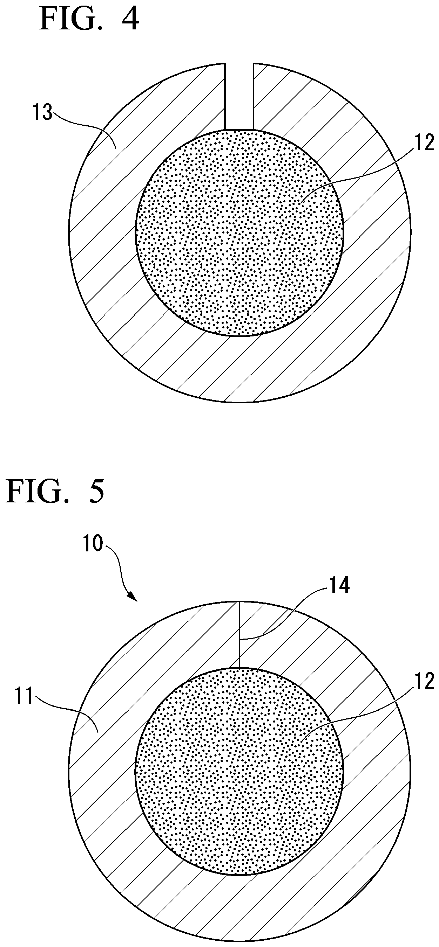

The method of manufacturing a flux-cored wire 10 according to this embodiment in which the inside of a steel sheath 11 is filled with a flux 12 includes a step of filling the inside of a steel sheet 13 with the flux 12 while forming the steel sheet 13 into a cylindrical shape (see FIG. 4), a step of joining both ends of the steel sheet 13 to form a steel pipe, and a step of rolling and annealing the steel pipe to obtain the flux-cored wire 10. Rolling and annealing are performed in order to make the wire 10 thin so as to be usable as a welding material and to soften the wire 10. The chemical composition of the steel sheet 13 is substantially the same as that of the steel sheath 11.

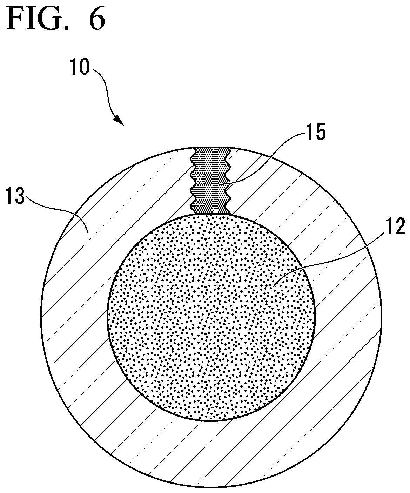

Means for joining is not particularly limited, and examples thereof include caulking and welding. A wire 10 manufactured by caulking shown in FIG. 5 has a seam 14. On the other hand, a wire 10 manufactured by welding shown in FIG. 6 is a so-called seamless wire having a weld part 15 without the seam 14. The seamless wire is preferable since it can be further heat-treated to reduce the amount of hydrogen in the wire. In addition, since the moisture-absorption amount after the manufacturing is small, the amount of diffusible hydrogen of a weld metal can be reduced and the crack resistance can be improved.

For the purpose of improving the feedability of the wire during welding, the method of manufacturing a flux-cored wire 10 according to this embodiment may further include a step of plating an outer surface of the steel sheath 11 and/or a step of applying a lubricant to the outer surface of the steel sheath 11. The plating is, for example, copper plating. The lubricant is, for example, vegetable oil or PTFE oil.

In the method of manufacturing a flux-cored wire 10 according to this embodiment, the chemical compositions of the steel sheath 11 and the flux 12 are controlled within a predetermined range. The components contained in the steel sheath 11 and the flux 12 melt during welding to form a weld metal, and a part thereof is oxidized and discharged as slag to the outside of the weld metal. Therefore, the components to be described below are thought to provide the same effect even in a case where the components are contained in any of the steel sheath 11 and the flux 12. For the above reason, it is not necessary to distinguish the chemical composition of the steel sheath 11 from the chemical composition of the flux 12 in the manufacturing method according to this embodiment. Hereinafter, unless otherwise specified, a chemical composition (component) existing in the form of oxide or fluoride will be defined as a slag composition, and a chemical composition (component) existing as another single metal or alloy will be defined as an alloy composition. C, P, and S are not metal elements. However, for the sake of convenience, these are included as alloy compositions in this embodiment. Regarding Al and Bi, oxides thereof are considered to exhibit the same action as that of Al and Bi as alloy compositions, and thus the oxides are substantially handled as alloy compositions. The amount of an element to be described below is the amount of an element existing as an alloy composition as long as there is no particular specification such as the fact that the element is a slag composition. The alloy composition may be contained in any of the steel sheath 11 and the flux 12, but the slag composition is usually contained only in the flux 12.

In manufacturing of a flux-cored wire 10 according to this embodiment, the diameter and the filling rate (the ratio of the mass of the flux 12 to the total mass of the flux-cored wire 10) of the flux-cored wire 10 to be manufactured and the design values (target values) of the chemical composition of the flux-cored wire 10 are previously determined. As the steel sheet 13 which is a raw material of the steel sheath, a material having a specific chemical composition is usually used. From documents showing the chemical composition (for example, the result of analysis of the chemical composition of the steel sheet 13, or an inspection certificate or catalog of a steel manufacturer), the chemical composition of the steel sheath 11 can be grasped. Therefore, it is possible to determine the design values (target values) of the chemical composition of the flux 12 from the filling rate and the design values (target values) of the chemical composition of the steel sheath 11 and the chemical composition of the flux-cored wire 10. In addition to the determined design values (target values) of the chemical composition of the flux 12, raw materials of the flux 12 are selected from documents (for example, a report, certificate, or catalog of a raw material manufacturer) showing the chemical compositions of the raw materials of the flux 12 (both the raw materials of the slag compositions and the raw materials of the metal components), and the mixing ratio of the raw materials is determined.

That is, the raw materials of the flux 12 selected according to the above procedure are mixed with the mixing ratio determined according to the above procedure to produce the flux 12. Using the flux 12 manufactured as described above and the steel sheet 13, a flux-cored wire 10 having a designed chemical composition can be manufactured. In a case where the flux-cored wire 10 is plated, it is necessary to control the chemical compositions of the steel sheath 11 and the flux 12 according to the chemical composition and the thickness of the plating.

[C: 0.03% to 0.12%]

C is the most fundamental element necessary for securing the strength and hardenability of a weld metal. In a case where the C content is less than 0.03%, a strength required for the weld metal cannot be obtained. In a case where the C content is less than 0.03%, toughness is decreased. On the other hand, in a case where the C content exceeds 0.12%, hot cracking easily occurs, and the toughness of the weld metal is decreased with an increase in the strength of the weld metal. Accordingly, the C content is set to 0.03% to 0.12%. The lower limit of the C content is preferably 0.04% or 0.05%. The upper limit of the C content is preferably 0.07% or 0.06%. C may exist as a component of the steel sheath 11 and as a component of a metal powder and an alloy powder in the flux 12. That is, it is possible to manufacture a flux-cored wire 10 having the above-described C content by controlling the C content of the steel sheath 11 and the C content of the flux 12.

[Si: 0.20% to 0.85%]

Si is an element acting as a deoxidizing agent during welding. In a case where the Si content is less than 0.20%, the toughness of a weld metal is decreased due to insufficient deoxidation. On the other hand, in a case where the Si content exceeds 0.85%, the strength of the weld metal is increased, and thus the toughness of the weld metal is decreased. Accordingly, the Si content is set to 0.20% to 0.85%. The lower limit of the Si content is preferably 0.30%, 0.40%, or 0.50%. The upper limit of the Si content is preferably 0.70%, 0.65%, or 0.60%. Si may exist as a component of the steel sheath 11 and as a metal Si and a component of an alloy powder such as Fe-Si and Fe-Si-Mn in the flux 12. That is, it is possible to manufacture a flux-cored wire 10 having the above-described Si content by controlling the Si content of the steel sheath 11 and the Si content of the flux 12.

[Mn: 1.50% to 3.20%]

Mn is an element required for securing the strength of a weld metal and for securing the toughness of the weld metal by assisting deoxidation during welding. In a case where the Mn content is less than 1.50%, the strength and toughness of the weld metal are decreased. On the other hand, in a case where the Mn content exceeds 3.20%, the strength of the weld metal is increased, and thus the toughness is decreased. Accordingly, the Mn content is set to 1.50% to 3.20%. The lower limit of the Mn content is preferably 1.80%, 2.00%, or 2.20%. The upper limit of the Mn content is preferably 3.00%, 2.80%, or 2.20%. Mn may exist as a component of the steel sheath 11 and as a metal Mn and a component of an alloy powder such as Fe-Mn and Fe-Si-Mn in the flux 12. That is, it is possible to manufacture a flux-cored wire 10 having the above-described Mn content by controlling the Mn content of the steel sheath 11 and the Mn content of the flux 12.

[P: 0.020% or less]

[S: 0.020% or less]

Since P and S are elements which may adversely affect the mechanical properties of a weld metal and impair the corrosion resistance of the weld metal, it is most preferable that P and S are not contained in the wire. Therefore, the lower limits of the P content and the S content are 0%. However, P and S may be contained within a range not impairing the characteristics of the weld metal since a lot of costs are required to completely remove P and S from the material of the wire. In the wire according to this embodiment, 0.020% or less of P and 0.020% or less of S are allowed. The upper limit of the P content or the S content may be 0.015%, 0.010%, or 0.005%. The lower limit of the P content or the S content may be 0.001%, 0.002%, or 0.005%. By controlling the P content and the S content of the steel sheath 11 and the P content and the S content of the flux 12 as in the case of C and Si, it is possible to manufacture a flux-cored wire 10 having the above-described P content and S content.

[Cu: 0% to 0.70%]

Cu is not an essential component in the method of manufacturing a flux-cored wire according to this embodiment. However, Cu is an element for weather resistance and coating delamination resistance like Sn, and in order to obtain higher weather resistance and coating delamination resistance, the wire may contain Cu within a range of 0% to 0.70% in addition to Sn. In order to exhibit higher weather resistance and coating delamination resistance, the Cu content is preferably 0.05% or more. However, in a case where the Cu content exceeds 0.70%, the toughness of a weld metal is decreased. Therefore, the Cu content is set to 0.70% or less. The lower limit of the Cu content is more preferably 0.10%, 0.20%, or 0.30%. The upper limit of the Cu content is more preferably 0.60%, 0.50%, or 0.40%. Cu may exist as a component of the steel sheath 11 itself, a plating component of the steel sheath 11, or a metal Cu in the flux 12. That is, it is possible to manufacture a flux-cored wire 10 having the above-described Cu content by controlling the Cu content of the steel sheath 11, the Cu content of the plating, and the Cu content of the flux 12.

The reason why Cu improves the weather resistance and coating delamination resistance of a weld metal is that the rate of a dissolution reaction (corrosion reaction) of a Cu-containing weld metal itself is reduced, and in the Cu-containing weld metal, a corrosion product (rust) formed on a surface (such as an excess weld metal portion) has a characteristic fine and dense structure, and thus forms a highly corrosion-resistant rust layer inhibiting permeation of water, oxygen, chloride ions, and the like.

[Sn: 0.05% to 0.40%]

Sn is an important element for securing the weather resistance and coating delamination resistance of a weld metal. In a case where the Sn content is less than 0.05%, the weather resistance and coating delamination resistance of the weld metal cannot be secured. On the other hand, in a case where the Sn content exceeds 0.40%, the toughness of the weld metal is decreased due to the segregation of Sn at the grain boundary of the weld metal. Accordingly, the Sn content is set to 0.05% to 0.40%. The lower limit of the Sn content may be preferably 0.10%, 0.15%, or 0.18%. The upper limit of the Sn content may be preferably 0.30%, 0.25%, or 0.20%. Sn may be contained as a component of the steel sheath 11 or as a metal Sn or a Sn compound in the flux 12. It is possible to manufacture a flux-cored wire 10 having the above-described Sn content primarily by controlling the Sn content of the steel sheath 11 and the Sn content of the flux 12.

The reason why Sn improves the weather resistance and coating delamination resistance of a weld metal is that the metal Sn in the weld metal is eluted as a tin ion (II) ($Sn^{2+}$) and exhibits an inhibiting action in a portion exposed to the environment, that is, in an acidic chloride solution to inhibit the corrosion in an anode in which the pH decreases. In addition, since the metal Sn in the weld metal also acts to reduce an iron (III) ion ($Fe^{3+}$) ($2Fe^{3+}+Sn^{2+}\rightarrow 2Fe^{2+}+Sn^{4+}$), the corrosion promoting action of $Fe^{3+}$ is inhibited, and the weather resistance in a high floating salinity environment is improved.

[Mg: 0.05% to 0.70%]

Mg is an element required for reducing the amount of oxygen in a weld metal and for securing the toughness of the weld metal. In a case where the Mg content is less than 0.05%, the toughness of the weld metal is decreased. On the other hand, in a case where the Mg content exceeds 0.70%, the amount of spatters during welding is increased, and metal sagging easily occurs in vertical upward welding and overhead position welding. In a case where the Mg content exceeds 0.70%, the bead appearance and the bead shape are deteriorated in horizontal fillet welding. Accordingly, the Mg content is set to 0.05% to 0.70%. The lower limit of the Mg content may be 0.10%, 0.20%, or 0.25%. The upper limit of the Mg content may be 0.60%, 0.50%, or 0.40%. A general Mg content of the steel sheath 11 is almost 0%. For this reason, Mg often exists in the wire as a metal Mg or an alloy powder such as Al-Mg in the flux 12. That is, it is possible to manufacture a flux-cored wire 10 having the above-described Mg content primarily by controlling the Mg content of the flux 12.

[$TiO_2$ Equivalent of Ti Oxide: 4.60% to 7.00%]

A Ti oxide which is a slag composition is a main component of molten slag and gives proper viscosity and a proper melting point to the molten slag to allow the entire bead to be enclosed by the slag, thereby improving resistance to metal sagging especially in vertical upward welding and overhead position welding. Furthermore, the Ti oxide has an effect of stably sustaining an arc, thereby reducing the amount of spatters. In a case where the $TiO_2$ equivalent of the Ti oxide is less than 4.60%, metal sagging easily occurs in vertical upward welding and overhead position welding, and thus a smooth bead cannot be obtained. On the other hand, in a case where the $TiO_2$ equivalent of the Ti oxide exceeds 7.00%, the amount of the slag is increased, a lower part of the bead swells in horizontal fillet welding, and thus the bead shape is deteriorated. In addition, in a case where the $TiO_2$ equivalent of the Ti oxide exceeds 7.00%, slag inclusion easily occurs. Accordingly, the $TiO_2$ equivalent of the Ti oxide is set to 4.60% to 7.00%. The lower limit of the $TiO_2$ equivalent of the Ti oxide is preferably 4.80%, 5.00%, or 5.50%. The upper limit of the $TiO_2$ equivalent of the Ti oxide is preferably 6.60%, 6.20%, or 6.00%. The Ti oxide may primarily exist as rutile, titanium oxide, titanium slag, iluminite, sodium titanate, potassium titanate, or the like in the flux 12. Therefore, it is possible to manufacture a flux-cored wire 10 having the above-described Ti oxide content (4.60% to 7.00% in terms of $TiO_2$ equivalent) primarily by controlling the Ti oxide content of the flux 12.

Here, the method of calculating an equivalent will be described with the $TiO_2$ equivalent of the Ti oxide as an example. The $TiO_2$ equivalent of the Ti oxide is defined to be the mass% of $TiO_2$ with respect to the total mass of the wire in a case where all the Ti oxides (for example, $TiO_2$, $Ti_2O_3$, $Ti_3O_5$, sodium titanate, and potassium titanate) contained in the wire are regarded as $TiO_2$. Accordingly, the $TiO_2$ equivalent is obtained by measuring the total mass of only Ti, obtained by excluding O from the mass of the Ti oxide, and substituting the total Ti content into Expression A.

($TiO_2$ Equivalent)=(Mass% of Ti Which Forms Ti Oxide with respect to Total Mass of Wire)×(Expression Weight of $TiO_2$)/(Atomic Weight of Ti): Expression A

The $SiO_2$ equivalent of a Si oxide, the $ZrO_2$ equivalent of a Zr oxide, and the FeO equivalent of a Fe oxide can also be obtained by the same calculation.

[$SiO_2$ Equivalent of Si Oxide: 0.20% to 0.90%]

A Si oxide which is a slag composition increases the viscosity of molten slag to adjust the enclosing properties of the slag on the bead. In a case where the $SiO_2$ equivalent of the Si oxide is less than 0.20%, the molten slag has insufficient viscosity, enclosing by the slag is not sufficiently conducted in horizontal fillet welding, and the bead appearance is deteriorated. On the other hand, in a case where the $SiO_2$ equivalent of the Si oxide exceeds 0.90%, the melting point of the molten slag is lowered, and metal sagging easily occurs in vertical upward welding and overhead position welding. In addition, in a case where the $SiO_2$ equivalent of the Si oxide exceeds 0.90%, the amount of oxygen in a weld metal is increased, and thus toughness is decreased. Accordingly, the $SiO_2$ equivalent of the Si oxide is set to 0.20% to 0.90%. The lower limit of the $SiO_2$ equivalent of the Si oxide is preferably 0.30% or 0.40%. The upper limit of the $SiO_2$ equivalent of the Si oxide is preferably 0.80%, 0.70%, or 0.60%. The Si oxide may primarily exist as silica sand, zircon sand, feldspar, sodium silicate, potassium silicate, or the like in the flux 12. Therefore, it is possible to manufacture a flux-cored wire 10 having the above-described Si oxide content (0.20% to 0.90% in terms of $SiO_2$ equivalent) primarily by controlling the Si oxide content of the flux 12.

[$ZrO_2$ Equivalent of Zr Oxide: 0.10% to 0.70%]

A Zr oxide which is a slag composition has an effect of increasing the melting point of molten slag, thereby improving resistance to metal sagging in vertical upward welding and overhead position welding, and also has an effect of adjusting the enclosing properties of the slag and forming a smooth bead in horizontal fillet welding. In a case where the $ZrO_2$ equivalent of the Zr oxide is less than 0.10%, these effects cannot be obtained. Accordingly, in vertical upward welding and overhead position welding, metal sagging occurs, and in horizontal fillet welding, the enclosing properties of the slag are deteriorated and the bead shape is thus deteriorated. On the other hand, in a case where the $ZrO_2$ equivalent of the Zr oxide exceeds 0.70%, the melting point of the molten slag becomes too high, and metal sagging easily occurs in vertical upward welding and overhead position welding. In addition, in a case where the $ZrO_2$ equivalent

of the Zr oxide exceeds 0.70%, a convex bead shape is obtained in horizontal fillet welding. Furthermore, in a case where the $ZrO_2$ equivalent of the Zr oxide exceeds 0.70%, the slag becomes dense and hard regardless of the welding position, and thus slag delamination is deteriorated. Accordingly, the $ZrO_2$ equivalent of the Zr oxide is set to 0.10% to 0.70%. The lower limit of the $ZrO_2$ equivalent of the Zr oxide is preferably 0.20%, 0.30%, or 0.40%. The upper limit of the $ZrO_2$ equivalent of the Zr oxide is preferably 0.60%, 0.50%, or 0.40%. The Zr oxide may primarily exist as zircon sand, zirconium oxide, or the like in the flux 12. In some cases, the Zr oxide may be contained in a small amount in the above-described Ti oxide. Therefore, it is possible to manufacture a flux-cored wire 10 having the above-described Zr oxide content (0.10% to 0.70% in terms of $ZrO_2$ equivalent) primarily by controlling the Zr oxide content of the flux 12.

[Na Compound and K Compound: 0.05% to 0.40% in terms of sum of $Na_2O$ Equivalent and $K_2O$ Equivalent]

A Na compound and a K compound act to stabilize an arc during welding and to adjust the viscosity of molten slag during welding, thereby adjusting the bead shape and the bead appearance. In a case where the sum of the $Na_2O$ equivalent of the Na compound and the $K_2O$ equivalent of the K compound is less than 0.05%, the arc becomes unstable during welding, and thus a lot of spatters are generated. In a case where the sum of the $Na_2O$ equivalent of the Na compound and the $K_2O$ equivalent of the K compound is less than 0.05%, the bead shape and the bead appearance is deteriorated in horizontal fillet welding. On the other hand, in a case where the sum of the $Na_2O$ equivalent of the Na compound and the $K_2O$ equivalent of the K compound exceeds 0.40%, the viscosity of the molten slag is excessively decreased, and thus metal sagging easily occurs in vertical upward welding and overhead position welding. In addition, in a case where the sum of the $Na_2O$ equivalent of the Na compound and the $K_2O$ equivalent of the K compound exceeds 0.40%, undercut easily occurs at an upper portion of the bead in horizontal fillet welding. Accordingly, the sum of the $Na_2O$ equivalent of the Na compound and the $K_2O$ equivalent of the K compound is set to 0.05% to 0.40%. The lower limit of the sum of the $Na_2O$ equivalent of the Na compound and the $K_2O$ equivalent of the K compound is preferably 0.10%, 0.15%, or 0.20%. The upper limit of the sum of the $Na_2O$ equivalent of the Na compound and the $K_2O$ equivalent of the K compound is preferably 0.35%, 0.30%, or 0.25%. The Na compound and the K compound may exist as oxides such as feldspar, sodium silicate, or potassium silicate or fluorides such as sodium fluoride, potassium silicofluoride, or cryolite in flux 12. In general, the amounts of the Na compound and the K compound in the steel sheath 11 are substantially 0%. Therefore, it is possible to manufacture a flux-cored wire 10 having the above-described amounts of the Na compound and the K compound primarily by controlling the amounts of the Na compound and the K compound in the flux 12.

The $Na_2O$ equivalent of the Na compound is the mass% of $Na_2O$ with respect to the total mass of the wire in a case where all the Na compounds contained in the wire are regarded as $Na_2O$. The $K_2O$ equivalent of the K compound is the mass% of $K_2O$ with respect to the total mass of the wire in a case where all the K compounds contained in the wire are regarded as $K_2O$. The $Na_2O$ equivalent of the Na compound and the $K_2O$ equivalent of the K compound are calculated by the same means as in the case of the $TiO_2$ equivalent of the Ti oxide described above.

[F Equivalent of Fluorine Compound: 0.02% to 0.25%]

A fluorine compound which is a slag composition improves the concentration properties of an arc and has an effect of forming a stable molten pool. In addition, the fluorine compound acts to adjust the viscosity of molten slag, thereby forming a smooth bead shape. In a case where the F equivalent of the fluorine compound is less than 0.02%, the bead shape is not stable in horizontal fillet welding. On the other hand, in a case where the F equivalent of the fluorine compound exceeds 0.25%, the viscosity of the molten slag is excessively decreased, and thus metal sagging easily occurs in vertical upward welding and overhead position welding. In addition, in a case where the F equivalent of the fluorine compound exceeds 0.25%, the amount of spatters is increased. Accordingly, the F equivalent of the fluorine compound is set to 0.02% to 0.25%. The lower limit of the F equivalent of the fluorine compound may be 0.05%, 0.10%, or 0.15%. The upper limit of the F equivalent of the fluorine compound may be 0.22%, 0.20%, or 0.18%. The fluoride may exist as sodium fluoride, potassium silicofluoride, magnesium fluoride, cryolite, or the like in the flux 12. The F equivalent of the fluorine compound is, by mass% with respect to the total mass of the wire, the total amount of F contained in all the fluorine compounds in the wire. A general fluorine compound content of the steel sheath 11 is substantially 0%. Therefore, it is possible to manufacture a flux-cored wire 10 having the above-described fluorine compound content primarily by controlling the fluorine compound content of the flux 12.

In the method of manufacturing a flux-cored wire 10 according to this embodiment, the steel sheath 11 and the flux 12 contain the above elements and compounds as essential requirements (Cu may not be contained), but may further optionally contain the following elements and compounds. However, even in a case where the optional components listed below are not contained, the method of manufacturing a flux-cored wire 10 according to this embodiment can solve the problems, and thus the lower limit of the amounts of each of the optional components is 0%.

[Ni: 0% to 3.00%]

[Ti: 0% to 0.50%]

[B: 0% to 0.010%]

Ni, Ti, and B have an effect of improving the low temperature toughness of a weld metal, and thus may be contained in the wire. In a case where the Ni content exceeds 3.00%, hot cracking easily occurs in the weld metal. In a case where the Ti content exceeds 0.50%, the toughness of the weld metal is decreased, the amount of spatters is increased, and seizure of slag easily occurs on the bead surface. In a case where the B content exceeds 0.010%, hot cracking easily occurs in the weld metal. Accordingly, the Ni content is set to 3.00% or less, the Ti content is set to 0.50% or less, and the B content is set to 0.010% or less. The upper limit of the Ni content is preferably 2.60%, 2.20%, or 2.00%. The upper limit of the Ti content is preferably 0.40%, 0.30%, or 0.20%. The upper limit of the B content is preferably 0.008%, 0.005%, or 0.003%. Ni may exist as a component of the steel sheath 11 and as a metal Ni and a component of an alloy powder such as Fe-Ni in the flux 12. Ti may exist as a component of the steel sheath 11 and as a metal Ti and a component of an alloy powder such as Fe-Ti in the flux 12. B may exist as a component of the steel sheath 11 and as a metal B and a component of an alloy powder such as Fe-B and Fe-Mn-B in the flux 12. That is, it is possible to manufacture a flux-cored wire 10 having the above-described Ni content, Ti content, and B content primarily by controlling the Ni content, the Ti content, and the B content of the steel sheath 11 and the Ni content, the Ti content, and the B content of the flux 12. In order to adjust the Ni content, the Ti content, and the B content of the flux-cored wire 10 within the above-described ranges, a steel sheath 11 having the above-described chemical composition (Ni: 0% to 3.00%, Ti: 0% to 0.50%, B: 0% to 0.010%) and a flux 12 having the above-described chemical composition (Ni: 0% to 3.00%, Ti: 0% to 0.50%, B: 0% to 0.010%) may be used.

In order to improve the low temperature toughness of the weld metal, one or more selected from the group consisting of 0.10% or more of Ni, 0.03% or more of Ti, and 0.002% or more of B are preferably contained in the wire. Particularly, in order to improve the Charpy absorbed energy at -40°C, it is necessary to satisfy one or more of Ni: 0.10% to 3.00%, Ti: 0.03% to 0.50%, and B: 0% to 0.010%.

[Mo: 0% to 0.40%]

Mo has an effect of improving the strength of a weld metal, and thus may be contained in the wire. However, in a case where the Mo content exceeds 0.40%, it is impossible to prevent the corrosion depth immediately under a coating film damage portion from being increased due to competition with Sn ionization especially in a case where coating film damages are generated in a high floating salinity environment. Accordingly, the Mo content is set to 0.40% or less. In addition, in order to obtain the effect of improving the strength of the weld metal, the Mo content is preferably 0.01% or more. The upper limit of the Mo content is preferably 0.30%, 0.10%, or 0.04%. Mo may exist in the wire as a component of the steel sheath 11, a metal Mo, or an alloy powder such as Fe-Mo. That is, it is possible to manufacture a flux-cored wire 10 having the above-described Mo content primarily by controlling the Mo content of the steel sheath 11 and the Mo content of the flux 12. In order to adjust the Mo content of the flux-cored wire 10 within the above-described range, a steel sheath 11 having the above-described Mo content (that is, 0% to 0.40%) and a flux 12 having the above-described Mo content (that is, 0% to 0.40%) may be used.

[W: 0% to 0.200%]

W may be contained in the wire since it contributes to the improvement of the strength of a weld metal. However, in a case where the W content exceeds 0.200%, it is impossible to prevent the corrosion depth immediately under a coating film damage portion from being increased due to competition with Sn ionization especially in a case where coating film damages are generated in a high floating salinity environment. In addition, the W content is more preferably 0.010% or less. The upper limit of the W content is preferably 0.150%, 0.100%, or 0.010%. W may exist in the wire as a component of the steel sheath 11 or as an alloy powder of a metal W or the like. That is, it is possible to manufacture a flux-cored wire 10 having the above-described W content primarily by controlling the W content of the steel sheath 11 and the W content of the flux 12. In order to adjust the W content of the flux-cored wire 10 within the above-described range, a steel sheath 11 having the above-described W content (that is, 0% to 0.200%) and a flux 12 having the above-described W content (that is, 0% to 0.200%) may be used.

[Cr: 0% to 0.500%]

Cr may be contained in the wire since it contributes to the improvement of the strength of a weld metal. However, in a case where the Cr content exceeds 0.500%, the strength of the weld metal is excessively increased, and thus the toughness of the weld metal is decreased. Accordingly, the Cr content is set to 0.500% or less. In order to obtain the effect of improving the strength of the weld metal, the Cr content is preferably 0.010% or more. The upper limit of the Cr content is preferably 0.400% or 0.300%. Cr may exist in the wire as a component of the steel sheath 11, a metal Cr, or an alloy powder such as Fe-Cr. That is, it is possible to manufacture a flux-cored wire 10 having the above-described Cr content primarily by controlling the Cr content of the steel sheath 11 and the Cr content of the flux 12. In order to adjust the Cr content of the flux-cored wire 10 within the above-described range, a steel sheath 11 having the above-described Cr content (that is, 0% to 0.500%) and a flux 12 having the above-described Cr content (that is, 0% to 0.500%) may be used.

[Nb: 0% to 0.300%]

Nb may be contained in the wire since it contributes to the improvement of the strength of a weld metal by precipitation strengthening. However, in a case where the Nb content exceeds 0.300%, Nb forms coarse precipitates and reduces the toughness of the weld metal. Accordingly, the upper limit of the Nb content is set to 0.300%. The upper limit of the Nb content may be 0.250% or 0.200%. In order to obtain the above-described effect, the lower limit of the Nb content may be 0.050% or 0.100%. Nb may exist in the wire as a component of the steel sheath 11, a metal Nb, or an alloy powder such as Fe-Nb. That is, it is possible to manufacture a flux-cored wire 10 having the above-described Nb content primarily by controlling the Nb content of the steel sheath 11 and the Nb content of the flux 12. In order to adjust the Nb content of the flux-cored wire 10 within the above-described range, a steel sheath 11 having the above-described Nb content (that is, 0% to 0.300%) and a flux 12 having the above-described Nb content (that is, 0% to 0.300%) may be used.

[V: 0% to 0.300%]

V may be contained in the wire since it contributes to the improvement of the strength of a weld metal. However, in a case where the V content exceeds 0.300%, the strength of the weld metal is excessively increased, and thus the toughness of the weld metal is decreased. Accordingly, the V content is set to 0.300% or less. In order to obtain the effect of improving the strength of the weld metal, the V content is preferably 0.010% or more. The upper limit of the V content is preferably 0.200% or 0.100%. V may exist in the wire as a component of the steel sheath 11, a metal V, or an alloy powder such as Fe-V. That is, it is possible to manufacture a flux-cored wire 10 having the above-described V content primarily by controlling the V content of the steel sheath 11 and the V content of the flux 12. In order to adjust the V content of the flux-cored wire 10 within the above-described range, a steel sheath 11 having the above-described V content (that is, 0% to 0.300%) and a flux 12 having the above-described V content (that is, 0% to 0.300%) may be used.

[N: 0% to 0.008%]

N is an element which impairs the toughness and the like of a weld metal, and thus it is most preferable that N is not contained in the wire. Therefore, the lower limit of the N content is 0%. However, N may be contained within a range not impairing the properties of the weld metal since a lot of costs are required to completely remove N from the material of the wire. In the wire according to this embodiment, 0.008% or less of N is allowed. The upper limit of the N content may be 0.007%, 0.006%, or 0.005%. In order to adjust the N content of the flux-cored wire 10 within the above-described range, a steel sheath 11 having the above-described N content (that is, 0% to 0.008%) and a flux 12 having the above-described N content (that is, 0% to 0.008%) may be used.

[Ca: 0% to 0.0050%]

[REM: 0% to 0.0050%]

Ca and REM act to improve the ductility and toughness of a weld metal by changing forms of a sulfide and an oxide. In order to obtain this effect, the Ca content may be 0.0002% or more, and the REM content may be 0.0002% or more. On the other hand, Ca and REM are also elements which increase the amount of spatters, thereby impairing welding workability. Accordingly, the upper limit of the Ca content is 0.0050%, and the upper limit of the REM content is 0.0050%. The upper limit of the Ca content may be 0.0040% or 0.0030%. The upper limit of the REM content may be 0.0040% or 0.0030%. Ca and REM may exist in the wire as a component of the steel sheath 11 or as a Ca compound or a REM compound. That is, it is possible to manufacture a flux-cored wire 10 having the above-described Ca content and REM content primarily by controlling the Ca content and the REM content of the steel sheath 11 and the Ca content and the REM content of the flux 12. In order to adjust the Ca content and the REM content of the flux-cored wire 10 within the above-described ranges, a steel sheath 11 having the above-described Ca content (that is, 0% to 0.0050%) and REM content (that is, 0% to 0.0050%) and a flux 12 having the above-described Ca content (that is, 0% to 0.0050%) and REM content (that is, 0% to 0.0050%) may be used.

The term "REM" refers to the total of 17 elements consisting of Sc, Y, and lanthanoid, and the "REM content" means the total amounts of the 17 elements. In a case where lanthanoid is used as REM, industrially, REM is added in the form of misch metal.

[Sb: 0% to 0.005%]

Sb is an element which imparts weather resistance and coating delamination resistance to a weld metal as in the case of Sn. Accordingly, the Sb content may be 0.001% or 0.002%. However, in a case where the Sb content exceeds 0.005%, the toughness of the weld metal is decreased due to the segregation of Sb at the grain boundary of the weld metal. Accordingly, the Sb content is set to 0.005% or less. The upper limit of the Sb content may be 0.004% or 0.003%. Sb may exist in the wire as a component of the steel sheath 11 or as a metal Sb or an alloy powder such as a Sb compound. That is, it is possible to manufacture a flux-cored wire 10 having the above-described Sb content primarily by controlling the Sb content of the steel sheath 11 and the Sb content of the flux 12. In order to adjust the Sb content of the flux-cored wire 10 within the above-described range, a steel sheath 11 having the above-described Sb content (that is, 0% to 0.005%) and a flux 12 having the above-described Sb content (that is, 0% to 0.005%) may be used.

[Fe Oxide: 0% to 2.50% in terms of FeO Equivalent]

A Fe oxide which is a slag composition is not an essential component. Accordingly, the lower limit of the FeO equivalent of the Fe oxide is 0%. The Fe oxide impairs welding workability, and thus hinders all position welding. Accordingly, the upper limit of the FeO equivalent of the Fe oxide is set to 2.50%. The lower limit of the FeO equivalent of the Fe oxide may be 0.10% or 0.50%. The upper limit of the FeO equivalent of the Fe oxide may be 2.00% or 1.50%. The Fe oxide exists primarily in the flux 12 in many cases, and it is possible to manufacture a flux-cored wire 10 having the above-described Fe oxide content (0% to 2.50% in terms of FeO equivalent) primarily by controlling the Fe oxide content of the flux 12.

[Al and Al Oxide: 0% to 0.60% in Total in terms of Al Equivalent]

Al and an Al oxide increase the melting point of molten slag and act to suppress metal sagging in vertical upward welding and overhead position welding. Accordingly, these may be contained in the wire. In a case where the Al equivalent of Al and the Al oxide in total exceeds 0.60%, the lower portion of the bead swells in horizontal fillet welding, and thus the appearance is deteriorated. In addition, in a case where the Al equivalent of Al and the Al oxide in total exceeds 0.60%, slag inclusion easily occurs. Accordingly, the Al equivalent of Al and the Al oxide in total is set to 0.60% or less. The Al equivalent of Al and the Al oxide in total may be 0.50% or 0.40%. In order to obtain the effect of suppressing metal sagging in vertical upward welding and overhead position welding, the Al equivalent of the Al oxide in total is preferably 0.01% or more, 0.05%, or 0.10%. The Al oxide may exist as alumina, feldspar, or the like in the flux 12. Furthermore, the metal Al or the alloy Al may exist as a component of the steel sheath 11 or as a metal Al powder, an Fe-Al alloy powder, an Al-Mg alloy powder, or the like in the flux 12. That is, it is possible to manufacture a flux-cored wire 10 having the above-described Al content and the above-described Al oxide content by primarily controlling the Al content of the steel sheath 11 and the Al content and the Al oxide content of the flux 12. In order to adjust the Al content and the Al oxide content of the flux-cored wire 10 within the above-described ranges, a steel sheath 11 having the above-described chemical composition (Al and Al oxide: 0% to 0.60% in total in terms of Al equivalent) and a flux 12 having the above-described chemical composition (Al and Al oxide: 0% to 0.60% in total in terms of Al equivalent) may be used.

The Al equivalent is the sum of the mass% of Al existing as a metal or an alloy with respect to the total mass of the wire and the mass% of Al in the Al oxide with respect to the total mass of the wire. Here, the Al equivalent of the Al oxide ($AlO_x$) is obtained by Expression B.

(Al Equivalent of Al Oxide ($AlO_x$))=(Al Oxide ($AlO_x$) Content by mass% with respect to Total Mass of Flux-Cored Wire)$\times$(Atomic Weight of Al)/(Expression Weight of Al Oxide ($AlO_x$)): Expression B

The Al equivalent of the flux-cored wire 10 is the sum of the Al equivalent of Al oxides ($AlO_x$, $AlO_y$, ...).

Since Al existing as a metal or an alloy and the Al oxide provide the same effect, both the amount of Al existing as a metal or an alloy and the Al oxide content are managed as an Al equivalent in the method of manufacturing a flux-cored wire 10 according to this embodiment.

[Bi and Bi Oxide: 0% to 0.035% in Total in terms of Bi Equivalent]

Bi and a Bi oxide have an effect of improving the slag delamination from the weld bead. Accordingly, these may be contained in the wire. However, in a case where the Bi equivalent of Bi and the Bi oxide exceeds 0.035%, hot cracking easily occurs in the weld metal. Accordingly, the Bi equivalent of Bi and the Bi oxide in total is set to 0.035% or less. The upper limit of the Bi equivalent of Bi and the Bi oxide in total is preferably 0.030% or 0.025%. In order to obtain the effect of improving the slag delamination, the Bi equivalent of Bi and the Bi oxide in total is preferably 0.005% or more or 0.010% or more. Bi and the Bi oxide may exist as a powder of the metal Bi, the Bi oxide, or the like. A steel sheet 13 containing Bi is very expensive. Therefore, it is possible to manufacture a flux-cored wire 10 having the above-described Bi content and Bi oxide content primarily by controlling the Bi content and the Bi oxide content of the flux 12. In order to adjust the Bi content and the Bi oxide content of the flux-cored wire 10 within the above-described ranges, a steel sheath 11 having the above-described chemical composition (Bi and Bi oxide: 0% to 0.035% in total in terms of Bi equivalent) and a flux 12 having the above-described chemical composition (Bi and Bi oxide: 0% to 0.035% in total in terms of Bi equivalent) may be used.

The Bi equivalent is the sum of the mass% of Bi existing as a metal or an alloy with respect to the total mass of the wire and the mass% of Bi in the Bi oxide (for example, $Bi_2O_3$) with respect to the total mass of the wire. Since Bi existing as a metal or an alloy and the Bi oxide provide the same effect, both the amount of Bi existing as a metal or an alloy and the Bi oxide content are managed as a Bi equivalent in the method of manufacturing a flux-cored wire 10 according to this embodiment.

[Sn+Sb>Mo+W]

In the method of manufacturing a wire according to this embodiment, the total amounts of Sn and Sb is required to exceed the total amounts of Mo and W. This is because especially in a high floating salinity environment, it is difficult to prevent the corrosion depth immediately under a coating film damage portion from being increased in a case where coating film damages are generated by deterioration in the coating film, and the coating delamination resistance is decreased. The above requirement can be stated in other words: an index X obtained by substituting the Sn content, the Sb content, the Mo content, and the W content into Expression C is more than 0. The components of the wire are preferably controlled such that the index X is 0.05 or more, 0.08 or more, or 0.10 or more.

$$\text{Index } X=(Sn+Sb)-(Mo+W): \text{Expression C}$$

In Expression C, each element symbol represents an amount of an element related to the element symbol by mass% with respect to the total mass of the flux-cored wire.

In the method of manufacturing a wire according to this embodiment, the remainder of the components of the wire consists of Fe and impurities. Fe exists as a component of the steel sheath 11 and a component in the flux 12 (Fe powder, Fe alloy powder (for example, Fe-Mn alloy powder, Fe-Si alloy powder, and the like). A Fe powder is used to adjust components other than Fe, and the content thereof may be optionally adjusted to 0% with respect to the total mass of the wire. In a case where the Fe powder content is too high, the toughness of a weld metal may be deteriorated by the iron oxide on the surface of the Fe powder. Therefore, the upper limit of the Fe powder content may be 10.0% or less with respect to the total mass of the wire. The impurities refer to raw materials such as ore or scrap in industrial manufacturing of the wire, or components mixed by various factors in the manufacturing steps, and mean those which are acceptable within a range not adversely affecting the method of manufacturing a wire according to this embodiment. For example, the wire according to this embodiment may contain O as impurities other than O of the oxides, and such O is acceptable as long as the content thereof is 0% to 0.080%. The total amount of O, including O of the Ti oxide, the Si oxide, the Zr oxide, the Fe oxide, the Al oxide, the Na compound, the K compound, the fluorine compound, and the Bi oxide described above, is usually 0.5% to 6.0%.

In the method of manufacturing a wire according to this embodiment, the filling rate (the ratio of the total mass of the flux 12 to the total mass of the wire) is not particularly limited. However, from the viewpoint of productivity, the filling rate is preferably 8% to 20% with respect to the total mass of the wire. The diameter of the wire is not particularly limited, but preferably 1.0 mm to 2.0 mm in consideration of convenience during welding.

Next, a flux-cored wire 10 according to another aspect of the invention and a method of manufacturing a welded joint according to another aspect of the invention will be described.

The flux-cored wire 10 according to another aspect of the invention is a flux-cored wire 10 obtained by the method of manufacturing a flux-cored wire 10 according to the embodiment described above. The method of manufacturing a welded joint according to another embodiment of the invention is a method of manufacturing a welded joint including a step of welding using the flux-cored wire 10 manufactured by the method of manufacturing a flux-cored wire 10 according to the embodiment described above. The flux-cored wire 10 according to this embodiment has a Sn content of 0.05% to 0.40%, and the Sn content, the Sb content, the W content, and the Mo content satisfy Expression C. Accordingly, with the flux-cored wire 10 and the method of manufacturing a welded joint according to this embodiment, it is possible to obtain a weld metal having excellent weather resistance and coating delamination resistance in an environment which contains corrosive substances such as a high floating salinity environment. In addition, the alloy compositions of the flux-cored wire 10 according to this embodiment are within the above-described predetermined ranges. Accordingly, with the flux-cored wire 10 and the method of manufacturing a welded joint according to this embodiment, it is possible to obtain a welded joint having excellent mechanical properties. Furthermore, the flux-cored wire 10 according to this embodiment is manufactured from a material in which slag compositions are within the above-described ranges. Accordingly, with the flux-cored wire 10 and the method of manufacturing a welded joint according to this embodiment, it is possible to secure good welding workability in all position welding.

The application of the flux-cored wire 10 and the method of manufacturing a welded joint according to this embodiment is not particularly limited, but it is particularly preferable to apply the flux-cored wire 10 and the method of manufacturing a welded joint to the manufacturing of steel for structure, especially harbor facilities, bridges, building/civil structures, or steel structures such as tanks, ship/marine structures, railways, or containers. In addition, the material of the steel to which the flux-cored wire 10 and the method of manufacturing a welded joint according to this embodiment are applied is not particularly limited, and may be normal steel such as carbon steel or low-alloy steel. Anti-weathering steel or low-alloy steel containing Ni, Sn, and the like is more advantageous from the viewpoint of weather resistance and coating corrosion resistance. The form of welding which is performed on the flux-cored wire 10 according to this embodiment and the form of welding which is included in the method of manufacturing a welded joint according to this embodiment are not particularly limited, but gas shield arc welding is preferably performed.

It is difficult to analyze the components of the flux-cored wire 10 obtained by the method of manufacturing a flux-cored wire 10 according to this embodiment. This is because it is difficult to specify components which are non-metallic substances of the flux 12 by analysis. It is not easy to determine whether an element such as Si contained as a non-metallic substance exists in the form of metal or alloy, oxide, fluoride, or carbonate in the coating material. For example, it is difficult to separate Si (metal Si) existing as a metal or an alloy from Si existing as an oxide ($SiO_2$). This is because a method of selectively dissolving only a metal Si to subject the metal Si to wet analysis has not been established. In addition, the flux 12 may contain a fluoride, or the fluorine liberated from the flux 12 may damage the analytical instrument. Furthermore, the method of manufacturing a flux-cored wire 10 may include a step of annealing a steel wire with the flux 12 sealed therein, and the annealing may unexpectedly change the composition of the non-metallic substances of the flux 12.


[Examples]

Hereinafter, the effects of the invention will be described in more detail by examples.

SPCC specified in JIS G 3141: 2011 "cold rolled steel sheet and steel strip" was used as a steel sheath and filling with a flux was performed. Then, it was reduced in diameter (intermediate annealing for softening of a sheath and for dehydrogenation was performed once) to produce various seamless type flux-cored wires having components shown in Tables 1-1 to 1-3, respectively, with a filling rate of 13.5% and a wire diameter of 1.2 mm without a gap penetrating through the steel sheath. A23 was manufactured by caulking. The numerical values in Tables 1-1 to 1-3 represent the mass% with respect to the total mass of the flux-cored wire (total mass of the steel sheath and the flux). The values described in Tables 1-1 to 1-3 are design values. In manufacturing of a flux-cored wire, the amount of each compound was controlled based on an analysis report on the chemical composition of a raw material of a flux, certificate, or catalog.

[Table 1-1]

| Classification | No. | Chemical compositions of Wire (mass%, remainder: Fe and impurities) | | | | | | | | | | | | |
|---|---|---|---|---|---|---|---|---|---|---|---|---|---|---|
| | | $TiO_2$ Equivalent | $SiO_2$ Equivalent | $ZrO_2$ Equivalent | FeO Equivalent | C | Si | Mn | Mg | Sn | (a) $Na_2O$ Equivalent | (b) $K_2O$ Equivalent | (a)+(b) | F Equivalent |
| Invention Examples | A1 | 4.62 | 0.73 | 0.59 | - | 0.09 | 0.62 | 1.54 | 0.22 | 0.21 | 0.16 | 0.05 | 0.21 | 0.08 |
| | A2 | 6.96 | 0.38 | 0.16 | - | 0.03 | 0.83 | 2.36 | 0.61 | 0.15 | 0.14 | 0.17 | 0.31 | 0.13 |
| | A3 | 5.80 | 0.23 | 0.20 | - | 0.04 | 0.26 | 3.14 | 0.14 | 0.19 | 0.15 | 0.22 | 0.37 | 0.15 |
| | A4 | 5.71 | 0.87 | 0.66 | - | 0.11 | 0.26 | 1.86 | 0.18 | 0.34 | 0.23 | 0.05 | 0.28 | 0.24 |
| | A5 | 4.70 | 0.32 | 0.12 | - | 0.06 | 0.22 | 2.12 | 0.08 | 0.13 | 0.17 | 0.19 | 0.36 | 0.18 |
| | A6 | 5.43 | 0.87 | 0.68 | - | 0.09 | 0.72 | 2.10 | 0.06 | 0.30 | 0.16 | 0.09 | 0.25 | 0.08 |
| | A7 | 5.54 | 0.49 | 0.67 | - | 0.04 | 0.84 | 2.34 | 0.18 | 0.25 | 0.03 | 0.03 | 0.06 | 0.09 |
| | A8 | 4.82 | 0.42 | 0.19 | - | 0.04 | 0.28 | 2.42 | 0.68 | 0.39 | 0.08 | 0.04 | 0.12 | 0.16 |
| | A9 | 5.47 | 0.32 | 0.52 | - | 0.07 | 0.32 | 2.06 | 0.46 | 0.19 | 0.16 | 0.22 | 0.38 | 0.11 |
| | A10 | 6.72 | 0.45 | 0.32 | - | 0.05 | 0.78 | 2.21 | 0.40 | 0.32 | 0.19 | 0.15 | 0.34 | 0.02 |
| | A11 | 5.85 | 0.64 | 0.54 | - | 0.03 | 0.69 | 2.84 | 0.53 | 0.27 | 0.17 | 0.12 | 0.29 | 0.06 |
| | A12 | 6.32 | 0.21 | 0.44 | - | 0.06 | 0.63 | 1.79 | 0.62 | 0.28 | 0.08 | 0.13 | 0.21 | 0.18 |
| | A13 | 5.22 | 0.65 | 0.32 | - | 0.06 | 0.62 | 2.23 | 0.59 | 0.33 | 0.16 | 0.17 | 0.33 | 0.15 |
| | A14 | 5.71 | 0.87 | 0.66 | - | 0.11 | 0.26 | 1.86 | 0.18 | 0.34 | 0.23 | 0.05 | 0.28 | 0.24 |
| | A15 | 5.71 | 0.87 | 0.66 | - | 0.11 | 0.26 | 1.86 | 0.18 | 0.34 | 0.23 | 0.05 | 0.28 | 0.24 |
| | A16 | 5.71 | 0.87 | 0.66 | - | 0.11 | 0.26 | 1.86 | 0.18 | 0.34 | 0.23 | 0.05 | 0.28 | 0.24 |
| | A17 | 5.54 | 0.49 | 0.67 | - | 0.04 | 0.84 | 2.34 | 0.18 | 0.25 | 0.03 | 0.03 | 0.06 | 0.09 |
| | A18 | 5.54 | 0.49 | 0.67 | - | 0.04 | 0.84 | 2.34 | 0.18 | 0.25 | 0.03 | 0.03 | 0.06 | 0.09 |
| | A19 | 4.70 | 0.32 | 0.12 | 1.62 | 0.06 | 0.22 | 2.12 | 0.08 | 0.13 | 0.17 | 0.19 | 0.36 | 0.18 |
| | A20 | 5.80 | 0.23 | 0.20 | - | 0.04 | 0.26 | 3.14 | 0.14 | 0.19 | 0.15 | 0.22 | 0.37 | 0.15 |
| | A21 | 5.80 | 0.23 | 0.20 | - | 0.04 | 0.26 | 3.14 | 0.14 | 0.19 | 0.15 | 0.22 | 0.37 | 0.15 |
| | A22 | 5.80 | 0.23 | 0.20 | - | 0.04 | 0.26 | 3.14 | 0.14 | 0.19 | 0.15 | 0.22 | 0.37 | 0.15 |

| Classification | No. | Chemical compositions of Wire (mass%, remainder: Fe and impurities) | | | | | | | | | | | | |
| | | $TiO_2$ Equivalent | $SiO_2$ Equivalent | $ZrO_2$ Equivalent | FeO Equivalent | C | Si | Mn | Mg | Sn | (a) $Na_2O$ Equivalent | (b) $K_2O$ Equivalent | (a)+(b) | F Equivalent |
|---|---|---|---|---|---|---|---|---|---|---|---|---|---|---|
| | A23 | 5.71 | 0.87 | 0.66 | - | 0.11 | 0.26 | 1.86 | 0.18 | 0.34 | 0.23 | 0.05 | 0.28 | 0.24 |
| | A24 | 5.71 | 0.87 | 0.66 | - | 0.11 | 0.26 | 1.86 | 0.18 | 0.34 | 0.23 | 0.05 | 0.28 | 0.24 |
| | A25 | 5.71 | 0.87 | 0.66 | - | 0.11 | 0.26 | 1.86 | 0.18 | 0.34 | 0.23 | 0.05 | 0.28 | 0.24 |
| Comparative Examples | B1 | 4.31 | 0.49 | 0.39 | - | 0.08 | 0.56 | 1.43 | 0.58 | 0.15 | 0.09 | 0.27 | 0.36 | 0.19 |
| | B2 | 7.22 | 0.84 | 0.24 | - | 0.01 | 0.33 | 1.59 | 0.07 | 0.28 | 0.25 | 0.08 | 0.33 | 0.22 |
| | B3 | 5.28 | 0.13 | 0.61 | - | 0.07 | 0.42 | 3.33 | 0.64 | 0.33 | 0.21 | 0.06 | 0.27 | 0.20 |
| | B4 | 4.89 | 0.98 | 0.70 | - | 0.04 | 0.74 | 2.89 | 0.39 | 0.02 | 0.16 | 0.04 | 0.20 | 0.16 |
| | B5 | 5.14 | 0.79 | 0.04 | - | 0.07 | 0.13 | 2.01 | 0.43 | 0.20 | 0.11 | 0.05 | 0.16 | 0.12 |
| | B6 | 4.84 | 0.52 | 0.77 | - | 0.06 | 0.52 | 2.73 | 0.03 | 0.29 | 0.17 | 0.2 | 0.37 | 0.16 |
| | B7 | 5.34 | 0.26 | 0.43 | - | 0.10 | 0.92 | 2.98 | 0.55 | 0.17 | 0.01 | 0.01 | 0.02 | 0.13 |
| | B8 | 6.28 | 0.34 | 0.61 | - | 0.09 | 0.32 | 2.31 | 0.76 | 0.46 | 0.14 | 0.08 | 0.22 | 0.21 |
| | B9 | 5.95 | 0.58 | 0.38 | - | 0.04 | 0.65 | 2.44 | 0.63 | 0.26 | 0.28 | 0.15 | 0.43 | 0.08 |
| | B10 | 5.85 | 0.27 | 0.48 | - | 0.05 | 0.54 | 2.26 | 0.52 | 0.19 | 0.14 | 0.1 | 0.24 | 0.28 |
| | B11 | 6.64 | 0.50 | 0.53 | - | 0.08 | 0.26 | 2.64 | 0.26 | 0.37 | 0.28 | 0.05 | 0.33 | 0.01 |
| | B12 | 5.62 | 0.66 | 0.47 | - | 0.02 | 0.33 | 1.98 | 0.54 | 0.22 | 0.18 | 0.08 | 0.26 | 0.12 |
| | B13 | 6.71 | 0.13 | 0.51 | - | 0.05 | 0.81 | 1.86 | 0.47 | 0.26 | 0.08 | 0.03 | 0.11 | 0.16 |
| | B14 | 6.32 | 0.43 | 0.46 | - | 0.06 | 0.44 | 2.54 | 0.66 | 0.03 | 0.02 | 0.07 | 0.09 | 0.21 |
| | B15 | 4.89 | 0.56 | 0.36 | - | 0.14 | 0.64 | 2.69 | 0.39 | 0.16 | 0.16 | 0.04 | 0.20 | 0.16 |

[Table 1-2]

| Classification | No. | Chemical compositions of Wire (mass%, remainder: Fe and impurities) | | | | | | | | | |
|---|---|---|---|---|---|---|---|---|---|---|---|
| | | Cu | (c) Al | (d) Al Equivalent of Al Oxide | (c)+(d) | Ni | Ti | B | Total of Bi and Bi Equivalent | Mo | W |
| Invention Examples | A1 | - | - | - | - | - | - | - | - | - | - |
| | A2 | - | - | - | - | - | - | - | - | - | - |
| | A3 | - | - | - | - | - | - | - | - | - | - |
| | A4 | - | - | - | - | - | - | - | - | - | - |
| | A5 | - | - | - | - | - | - | - | - | - | - |
| | A6 | 0.23 | - | - | - | - | - | - | - | - | - |
| | A7 | 0.28 | - | - | - | - | - | - | - | - | - |
| | A8 | 0.42 | 0.47 | 0.11 | 0.58 | - | - | - | 0.016 | - | - |
| | A9 | 0.31 | - | - | - | 2.96 | - | - | - | - | - |
| | A10 | - | 0.17 | 0.05 | 0.22 | - | - | - | - | - | - |
| | A11 | - | 0.11 | 0.05 | 0.16 | - | - | 0.009 | - | - | - |
| | A12 | - | - | - | - | 0.64 | 0.31 | 0.008 | - | - | - |
| | A13 | | | | | | | | 0.032 | - | |
| | A14 | - | - | - | - | - | - | - | | 0.08 | - |
| | A15 | - | - | - | - | - | - | - | - | 0.03 | - |
| | A16 | - | - | - | - | - | - | - | - | 0.26 | 0.038 |
| | A17 | 0.28 | - | - | - | - | - | - | - | 0.01 | 0.021 |
| | A18 | 0.28 | - | - | - | - | - | - | - | - | 0.134 |
| | A19 | - | - | - | - | - | - | - | - | - | - |
| | A20 | - | - | - | - | - | - | - | - | - | - |
| | A21 | - | - | - | - | - | - | - | - | - | - |
| | A22 | - | - | - | - | - | - | - | - | - | - |
| | A23 | - | - | - | - | - | - | - | - | - | - |
| | A24 | - | - | - | - | - | - | - | - | - | - |
| | A25 | - | - | - | - | - | - | - | - | - | - |
| Comparative Examples | B1 | - | - | - | - | - | - | 0.013 | - | - | - |
| | B2 | - | - | - | - | - | - | 0.004 | 0.024 | - | - |

(continued)

| Classification | No. | Chemical compositions of Wire (mass%, remainder: Fe and impurities) | | | | | | | | | |
| --- | --- | --- | --- | --- | --- | --- | --- | --- | --- | --- | --- |
| | | Cu | (c) Al | (d) Al Equivalent of Al Oxide | (c)+(d) | Ni | Ti | B | Total of Bi and Bi Equivalent | Mo | W |
| | B3 | - | - | - | - | - | - | - | - | - | - |
| | B4 | - | - | - | - | - | - | - | - | - | - |
| | B5 | - | - | - | - | - | - | - | - | - | - |
| | B6 | - | - | - | - | - | - | - | - | - | - |
| | B7 | 0.16 | - | - | - | - | - | - | - | - | - |
| | B8 | 0.42 | - | - | - | - | - | - | - | - | - |
| | B9 | 0.33 | 0.17 | 0.06 | 0.23 | - | - | - | 0.041 | - | - |
| | B10 | 0.76 | - | - | - | 1.44 | 0.14 | 0.008 | - | - | - |
| | Bll | 0.09 | 0.13 | 0.05 | 0.18 | - | - | - | - | 0.47 | - |
| | B12 | - | 0.56 | 0.11 | 0.67 | - | - | - | - | - | - |
| | B13 | - | - | - | - | 3.16 | - | - | - | 0.21 | - |
| | B14 | - | - | - | - | - | 0.57 | - | - | - | - |
| | B15 | - | - | - | - | - | - | - | - | - | - |

[Table 1-3]

| Classification | No. | Chemical compositions of Wire (mass%, remainder: Fe and impurities) | | | | | | | | | | |
|---|---|---|---|---|---|---|---|---|---|---|---|---|
| | | Cr | Nb | V | P | S | N | Ca | REM | Sb | Fe Powder | Index X |
| Invention Examples | A1 | - | - | - | 0.009 | 0.008 | 0.003 | - | - | - | 1.7 | 0.21 |
| | A2 | - | - | - | 0.009 | 0.010 | 0.003 | - | - | - | 1.7 | 0.15 |
| | A3 | - | - | - | 0.009 | 0.008 | 0.003 | - | - | - | 0.1 | 0.19 |
| | A4 | - | - | - | 0.011 | 0.014 | 0.002 | - | - | - | 2.1 | 0.34 |
| | A5 | - | - | - | 0.008 | 0.009 | 0.003 | - | - | - | 2.2 | 0.13 |
| | A6 | - | - | - | 0.009 | 0.008 | 0.003 | - | - | - | 2.2 | 0.30 |
| | A7 | - | - | - | 0.010 | 0.009 | 0.003 | - | - | - | 2.6 | 0.25 |
| | A8 | - | - | - | 0.008 | 0.009 | 0.003 | - | - | - | 2.5 | 0.39 |
| | A9 | - | - | - | 0.009 | 0.011 | 0.003 | - | - | - | 2.5 | 0.19 |
| | A10 | - | - | - | 0.009 | 0.008 | 0.003 | - | - | - | 3.5 | 0.32 |
| | A11 | - | - | - | 0.009 | 0.012 | 0.003 | - | - | - | 3.5 | 0.27 |
| | A12 | - | - | - | 0.007 | 0.008 | 0.003 | - | - | - | 9.9 | 0.28 |
| | A13 | - | - | - | 0.008 | 0.009 | 0.003 | - | - | - | 2.0 | 0.33 |
| | A14 | - | - | - | 0.011 | 0.014 | 0.002 | - | - | - | 2.1 | 0.26 |
| | A15 | - | - | - | 0.011 | 0.014 | 0.002 | - | - | - | 2.0 | 0.31 |
| | A16 | - | - | - | 0.011 | 0.014 | 0.002 | - | - | - | 2.1 | 0.04 |
| | A17 | - | - | - | 0.010 | 0.009 | 0.002 | - | - | - | 2.6 | 0.22 |
| | A18 | - | - | - | 0.011 | 0.009 | 0.003 | - | - | - | 2.6 | 0.12 |
| | A19 | - | - | - | 0.008 | 0.009 | 0.003 | - | - | - | 2.2 | 0.13 |
| | A20 | 0.082 | - | - | 0.009 | 0.008 | 0.003 | - | - | - | 0.1 | 0.19 |
| | A21 | - | 0.132 | - | 0.009 | 0.008 | 0.003 | - | - | - | 0.1 | 0.19 |
| | A22 | - | - | 0.108 | 0.009 | 0.008 | 0.003 | - | - | - | 0.1 | 0.19 |
| | A23 | - | - | - | 0.011 | 0.014 | 0.002 | 0.0032 | - | - | 2.1 | 0.34 |
| | A24 | - | - | - | 0.011 | 0.014 | 0.002 | - | 0.0038 | - | 2.1 | 0.34 |
| | A25 | - | - | - | 0.011 | 0.014 | 0.002 | - | - | 0.004 | 2.1 | 0.34 |
| Comparative Examples | B1 | - | - | - | 0.008 | 0.009 | 0.003 | - | - | - | 2.3 | 0.15 |
| | B2 | - | - | - | 0.009 | 0.008 | 0.002 | - | - | - | 2.3 | 0.28 |
| | B3 | - | - | - | 0.010 | 0.009 | 0.002 | - | - | - | 2.2 | 0.33 |

(continued)

| Classification | No. | Chemical compositions of Wire (mass%, remainder: Fe and impurities) | | | | | | | | | | |
|---|---|---|---|---|---|---|---|---|---|---|---|---|
| | | Cr | Nb | V | P | S | N | Ca | REM | Sb | Fe Pow-der | Index X |
| | B4 | - | - | - | 0.008 | 0.009 | 0.002 | - | - | - | 2.2 | 0.02 |
| | B5 | - | - | - | 0.011 | 0.014 | 0.003 | - | - | - | 2.0 | 0.20 |
| | B6 | - | - | - | 0.013 | 0.010 | 0.003 | - | - | - | 2.3 | 0.29 |
| | B7 | - | - | - | 0.010 | 0.008 | 0.003 | - | - | - | 2.0 | 0.17 |
| | B8 | - | - | - | 0.009 | 0.008 | 0.003 | - | - | - | 1.8 | 0.46 |
| | B9 | - | - | - | 0.009 | 0.012 | 0.003 | - | - | - | 1.8 | 0.26 |
| | B10 | - | - | - | 0.009 | 0.008 | 0.003 | - | - | - | 1.8 | 0.19 |
| | B11 | - | - | - | 0.010 | 0.009 | 0.002 | - | - | - | 3.5 | <u>-0.10</u> |
| | B12 | - | - | - | 0.009 | 0.008 | 0.003 | - | - | - | 3.4 | 0.22 |
| | B13 | - | - | - | 0.011 | 0.014 | 0.002 | - | - | - | 2.3 | 0.05 |
| | B14 | - | - | - | 0.009 | 0.014 | 0.003 | - | - | - | 2.3 | 0.03 |
| | B15 | - | - | - | 0.013 | 0.011 | 0.003 | - | - | - | 2.3 | 0.16 |
| Index X=(Sn+Sb)-(Mo+W) | | | | | | | | | | | | |

First, welding workability was examined. In the examination, experimental wires shown in Tables 1-1 to 1-3 were used to produce T-fillet test pieces with 12 mm thick SM490A steel specified in JIS G 3106: 2008 "rolled steel sheets for welded structure", and a fillet welding test was performed by semi-automatic welding in a horizontal position, a vertical upward position, and an overhead position under welding conditions shown in Table 2. The bead shape of the fillet weld part for each position, the amount of spatters, and the slag delamination were examined.

The bead shape was examined by visually inspecting the fillet weld part. Whether the bead surface was flat or did not excessively swell was confirmed, and the bead shape was judged to be "poor" in a case where the bead had an excessively swelling shape. The bead shape was also judged to be "poor" in a case where no bead was formed due to sagging of the molten metal during welding in vertical upward welding and overhead position welding.

In the evaluation of the amount of spatters, spatters scattering during welding were collected, and the mass of the spatters was measured. The amount of spatters was judged to be "large" in a case where the mass of the spatters per minute was 1.5 g or more, and to be "small" in a case where the mass of the spatters per minute was less than 1.5 g.

The slag delamination was judged to be "very good" in a case where the slag was peeled off without impact of a chisel, to be "good" in a case where the slag was peeled off by impact of a chisel (the slag was not peeled off without impact of the chisel), and to be "poor" in a case where the slag remained on the bead even after impact of a chisel.

[Table 2]

| Test Items | Welding Position | Current (A) | Voltage (V) | Welding Speed (cm/min) | Distance Between Chip and Parent Material (mm) | Shield Gas |
|---|---|---|---|---|---|---|
| Welding Workability Evaluation Test (T-fillet) | Horizontal | 260 to 300 | 30 to 32 | 30 to 40 | 15 to 25 | 100% $CO_2$ (flow rate: 20 to 25 L/min) |
| | Vertical Upward | 200 to 280 | 20 to 31 | 10 to 20 | 15 to 25 | |
| | Overhead | 180 to 230 | 20 to 26 | 10 to 30 | 15 to 25 | |
| Deposited Metal Test | Flat | 270 | 31 | 30 | 25 | |

Next, in order to evaluate mechanical properties and corrosion resistance of a deposited metal, a deposited metal test was performed according to JIS Z 3111: 2005 "methods of tension and impact tests for deposited metal", and an X-ray inspection was performed. Then, a tensile test, an impact test, and a corrosion resistance evaluation test were performed. The parent material used is a corrosion-resistant steel sheet containing C: 0.11%, Si: 0.18%, Mn: 1.44%, P: 0.011%, S: 0.002%, and Sn: 0.12%. In the deposited metal test, the welding conditions are as shown in Table 2. The welding conditions in the corrosion resistance evaluation test were the same as in the deposited metal test. In the X-ray inspection, in a case where slag inclusion, blow holes, incomplete penetration, or crater cracking was recognized, the type of the defect was described in the column of "Results of X-ray Inspection". In a case where the above-described defects were not recognized with a joint welding length of 500 mm, it was described as no defects.

The impact test temperature was 0°C. However, the impact test was performed at 0°C and -40°C only for the deposited metal obtained from the wire to which one or more of Ni, Ti, and B had been added.

Regarding the acceptance criteria for the mechanical properties of the deposited metal, a case where the tensile strength was 510 MPa to 660 MPa in the tensile test and the absorbed energy was 60 J or more in the impact test at 0°C was accepted. Regarding the acceptance criteria for the mechanical properties of the deposited metals obtained from the wires (A9, A11, A12, B1, B2, B10, B13, and B14) to which one or more of Ni, Ti, and B had been added in order to secure the low temperature toughness, a case where the deposited metal had a tensile strength of 510 MPa to 660 MPa and absorbed energy of 60 J or more at -40°C was accepted. Regarding the acceptance criteria for the mechanical properties of the deposited metals obtained from the wires (A14 to A17, B11, and B13) containing Mo added thereto, a case where the tensile strength was 590 MPa to 720 MPa and the absorbed energy at 0°C was 60 J or more was accepted.

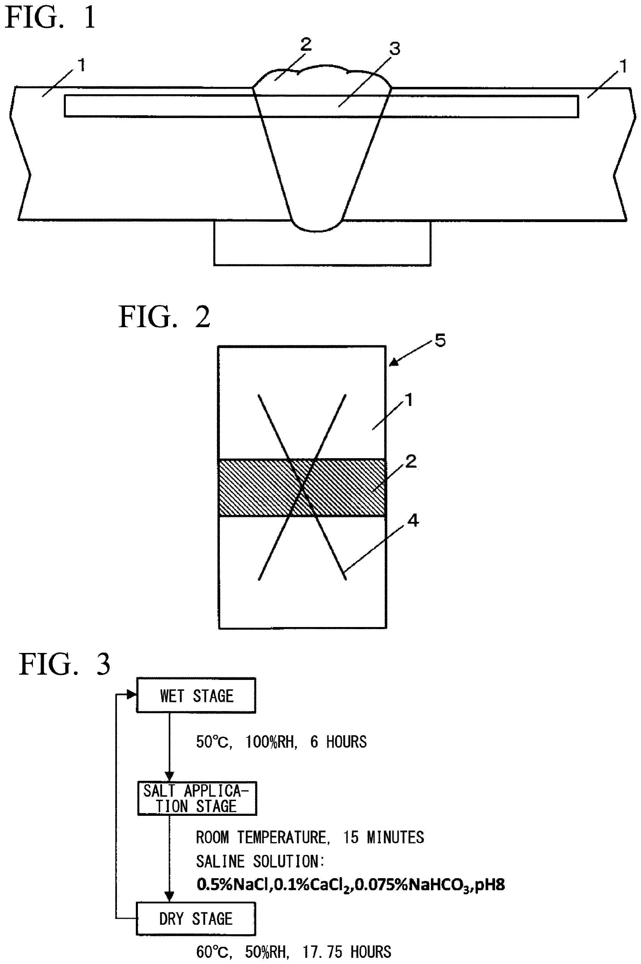

In the evaluation of the corrosion resistance, first, as shown in FIG. 1, a sample (3 mm thickness × 60 mm width × 150 mm length) for producing a test piece was collected from a position 3 at a depth of 1 mm from a surface of a parent material 1 such that the a deposited metal 2 was positioned at a center, and a surface of the sample was subjected to shot blasting. Then, drying by heating was performed at a furnace temperature of 80°C to prepare a corrosion test piece material. Next, any one of a coating A (BANNOH #200 manufactured by Chugoku Marine Paints, Ltd.) and a coating B (NEO GOSEI PRIMER HB manufactured by SHINTO PAINT CO., LTD.) was applied to both surfaces of the corrosion test piece material such that a film on the steel surface had a thickness of 200 to 350 μm, and thus a corrosion test piece was produced. As shown in FIG. 2, a cross cut 4 was formed on the test piece so as to straddle the deposited metal 2, whereby a corrosion test piece 5 in which a coating film damage was simulated was produced. The cross cut 4 was formed by forming scratches reaching from the top of the coating film to the steel surface of the base material by a cutter knife such that the rectangle having the cross cut as a diagonal had a size of 100 mm in long side × 40 mm in short side.

After that, the obtained corrosion test piece 5 was subjected to the evaluation of the corrosion resistance according to the Society of Automotive Engineers (SAE) J2334 test.

Here, the SAE J2334 test will be described. The SAE J2334 test is an acceleration test which is performed in a dry-wet repeating condition having three processes of wet stage (50°C, 100%RH, 6 hours), salt application stage (dipping in a saline solution containing 0.5 mass% of NaCl, 0.1 mass% of $CaCl_2$, and 0.075 mass% of $NaHCO_3$, 0.25 hours), and dry stage (60°C, 50%RH, 17.75 hours) as one cycle (24 hours in total). The one cycle is schematically shown in FIG. 3.

In the corrosion test, a severe corrosion environment in which the amount of flying salt exceeds 1 mdd is simulated.

After 80 cycles of the SAE J2334 test, a delamination/swelling area ratio of each test piece was measured. In addition, coating film adhesion evaluation was performed as a test reflecting long-term coating corrosion resistance performance of actual structures. Two transparent adhesion tapes with a width of 20 mm which had been cut into a rectangle with a long side length of 100 mm were attached to the whole area corresponding to a rectangle having a cross cut as a diagonal so as not to overlap each other, and within five minutes after the attachment of the tapes, the tapes were detached for 4.0 seconds to 8.0 seconds at an angle of about 60°. A tape delamination rate was obtained by dividing the area of the coating film peeled off by the tape delamination operation by the area of the coating film remaining immediately after 80 cycles of the SAE J2334 test. Thereafter, the residual coating film on the surface and the formed rust layer were removed. Corrosion depths of the coating film defect portions were measured, and then an average corrosion depth was calculated.

Regarding the acceptance criteria for the weather resistance/coating delamination resistance, a case where the delamination/swelling area ratio was less than 50% and the average corrosion depth of the coating film damage portions was less than 0.50 mm was accepted. Regarding the wires (A6 to A9, A17, A18, and B7 to B11) containing Cu added thereto, a case where the delamination/swelling area ratio was less than 20% and the average corrosion depth of the coating film damage portions was less than 0.25 mm was accepted. In the evaluation of the coating film adhesion, a case where the tape delamination rate was 0% to less than 20% was judged to be "very good", a case where the tape delamination rate was 20% to less than 40% was judged to be "good", and a case where the tape delamination rate was 50% or more was judged to be "poor". These results are summarized in Tables 3-1 and 3-2.

[Table 3-1]

| Classification | | | Welding Workability Evaluation Results | | | | | Results of X-ray Inspection |
|---|---|---|---|---|---|---|---|---|
| | | | Bead Shape | | | Amount of Spatters | Slag delamination | |
| | | | Horizontal | Vertical Upward | Overhead | | | |
| Invention Examples | A1 | | Good | Good | Good | Small | Good | No Defects |
| | A2 | | Good | Good | Good | Small | Good | No Defects |
| | A3 | | Good | Good | Good | Small | Good | No Defects |
| | A4 | | Good | Good | Good | Small | Good | No Defects |
| | A5 | | Good | Good | Good | Small | Good | No Defects |
| | A6 | | Good | Good | Good | Small | Good | No Defects |
| | A7 | | Good | Good | Good | Small | Good | No Defects |
| | A8 | | Good | Good | Good | Small | Very Good | No Defects |
| | A9 | | Good | Good | Good | Small | Good | No Defects |
| | A10 | | Good | Good | Good | Small | Good | No Defects |
| | A11 | | Good | Good | Good | Small | Good | No Defects |
| | A12 | | Good | Good | Good | Small | Good | No Defects |
| | A13 | | Good | Good | Good | Small | Very Good | No Defects |
| | A14 | | Good | Good | Good | Small | Good | No Defects |
| | A15 | | Good | Good | Good | Small | Good | No Defects |
| | A16 | | Good | Good | Good | Small | Good | No Defects |
| | A17 | | Good | Good | Good | Small | Good | No Defects |
| | A18 | | Good | Good | Good | Small | Good | No Defects |
| | A19 | | Good | Good | Good | Small | Good | No Defects |
| | A20 | | Good | Good | Good | Small | Good | No Defects |
| | A21 | | Good | Good | Good | Small | Good | No Defects |
| | A22 | | Good | Good | Good | Small | Good | No Defects |
| | A23 | | Good | Good | Good | Small | Good | No Defects |
| | A24 | | Good | Good | Good | Small | Good | No Defects |
| | A25 | | Good | Good | Good | Small | Very Good | No Defects |

(continued)

| Classification | | Welding Workability Evaluation Results | | | | | Results of X-ray Inspection |
| --- | --- | --- | --- | --- | --- | --- | --- |
| | | Bead Shape | | | Amount of Spatters | Slag delamination | |
| | | Horizontal | Vertical Upward | Overhead | | | |
| Comparative Examples | B1 | Good | Poor | Poor | Small | Good | Crater Cracking |
| | B2 | Poor | Good | Good | Small | Very Good | Slag Inclusion |
| | B3 | Poor | Good | Good | Small | Good | No Defects |
| | B4 | Good | Poor | Poor | Small | Good | No Defects |
| | B5 | Poor | Poor | Poor | Small | Good | No Defects |
| | B6 | Poor | Poor | Poor | Small | Poor | No Defects |
| | B7 | Poor | Good | Good | Large | Good | No Defects |
| | B8 | Poor | Poor | Poor | Large | Good | No Defects |
| | B9 | Poor | Poor | Poor | Small | Very Good | Crater Cracking |
| | B10 | Poor | Poor | Poor | Large | Good | No Defects |
| | B11 | Poor | Good | Good | Small | Good | No Defects |
| | B12 | Poor | Good | Good | Small | Good | Slag Inclusion |
| | B13 | Poor | Good | Good | Small | Good | Crater Cracking |
| | B14 | Good | Good | Good | Large | Poor | No Defects |
| | B15 | Good | Good | Good | Small | Good | Crater Cracking |

[Table 3-2]

| Classification | | Deposited Metal Test | | | Results of Corrosion Resistance Evaluation Test for Weld | | |
| --- | --- | --- | --- | --- | --- | --- | --- |
| | | Tensile Strength (MPa) | Absorbed Energy (J) | | Delamination/ Swelling Area Ratio (%) | Average Corrosion Depth of Coating Film Damage Portions (mm) | Coating Film Adhesion |
| | | | 0°C | -40°C | | | |
| | A1 | 527 | 105 | - | 30 | 0.36 | Very Good |
| | A2 | 555 | 112 | - | 32 | 0.39 | Very Good |
| | A3 | 636 | 89 | - | 31 | 0.37 | Very Good |
| | A4 | 574 | 120 | - | 27 | 0.33 | Very Good |
| | A5 | 548 | 110 | - | 33 | 0.40 | Very Good |
| | A6 | 589 | 163 | - | 18 | 0.23 | Very Good |
| | A7 | 564 | 126 | - | 18 | 0.23 | Very Good |
| | A8 | 560 | 135 | - | 17 | 0.22 | Very Good |

(continued)

| Classification | | Deposited Metal Test | | | Results of Corrosion Resistance Evaluation Test for Weld | | |
|---|---|---|---|---|---|---|---|
| | | Tensile Strength (MPa) | Absorbed Energy (J) | | Delamination/ Swelling Area Ratio (%) | Average Corrosion Depth of Coating Film Damage Portions (mm) | Coating Film Adhesion |
| | | | 0°C | -40°C | | | |
| Invention Examples | A9 | 633 | 120 | 102 | 18 | 0.23 | Very Good |
| | A10 | 559 | 113 | - | 28 | 0.34 | Very Good |
| | A11 | 603 | 145 | 135 | 29 | 0.35 | Very Good |
| | A12 | 539 | 127 | 93 | 28 | 0.34 | Very Good |
| | A13 | 568 | 113 | - | 27 | 0.33 | Very Good |
| | A14 | 603 | 114 | - | 33 | 0.38 | Good |
| | A15 | 596 | 125 | - | 30 | 0.34 | Very Good |
| | A16 | 678 | 131 | - | 38 | 0.42 | Good |
| | A17 | 608 | 122 | - | 18 | 0.20 | Good |
| | A18 | 612 | 118 | - | 18 | 0.23 | Good |
| | A19 | 548 | 78 | - | 38 | 0.44 | Very Good |
| | A20 | 656 | 80 | - | 35 | 0.39 | Very Good |
| | A21 | 650 | 74 | - | 30 | 0.37 | Very Good |
| | A22 | 658 | 68 | - | 30 | 0.37 | Very Good |
| | A23 | 586 | 77 | - | 25 | 0.32 | Very Good |
| | A24 | 593 | 85 | - | 27 | 0.35 | Very Good |
| | A25 | 579 | 108 | - | 27 | 0.33 | Very Good |

(continued)

| Classification | | Deposited Metal Test | | | Results of Corrosion Resistance Evaluation Test for Weld | | |
| | | Tensile Strength (MPa) | Absorbed Energy (J) | | Delamination/ Swelling Area Ratio (%) | Average Corrosion Depth of Coating Film Damage Portions (mm) | Coating Film Adhesion |
| | | | 0°C | -40°C | | | |
| Comparative Examples | B1 | 503 | 50 | 38 | 32 | 0.39 | Very Good |
| | B2 | 440 | 48 | 11 | 28 | 0.34 | Very Good |
| | B3 | 692 | 38 | - | 27 | 0.33 | Very Good |
| | B4 | 620 | 33 | - | 74 | 0.86 | Poor |
| | B5 | 545 | 53 | - | 30 | 0.36 | Very Good |
| | B6 | 620 | 53 | - | 28 | 0.34 | Very Good |
| | B7 | 698 | 48 | - | 18 | 0.23 | Very Good |
| | B8 | 602 | 29 | - | 16 | 0.11 | Very Good |
| | B9 | 570 | 98 | - | 17 | 0.22 | Very Good |
| | B10 | 598 | 46 | 14 | 31 | 0.38 | Good |
| | B11 | 756 | 35 | - | 18 | 0.23 | Poor |
| | B12 | 493 | 26 | - | 30 | 0.36 | Good |
| | B13 | 663 | 116 | 94 | 29 | 0.35 | Poor |
| | B14 | 598 | 54 | 8 | 68 | 0.80 | Poor |
| | B15 | 703 | 24 | - | 32 | 0.39 | Good |

In the tables, the wires A1 to A25 are invention examples, and the wires B1 to B15 are comparative examples.

In the wires A1 to A25 as the invention examples, each composition was contained within the range specified in the invention example. Accordingly, a good bead shape was obtained in fillet welding in a horizontal position, a vertical upward position, and an overhead position, the slag delamination was low, the amount of spatters was small, there were no defects in the X-ray inspection, the deposited metal had a good tensile strength and good absorbed energy, the delamination/swelling area ratio was less than 50%, and the corrosion depths of the coating damage portions were all less than 0.5 mm. Extremely satisfactory results were obtained.

In the wires A9, A11, and A12 containing one or more of Ni, Ti, and B, the absorbed energy of the deposited metal at -40°C was 60 J or more. In the wires A6, A7, A8, A9, A17, and A18 containing Cu, the delamination/swelling area ratio of the weld part in the corrosion resistance evaluation test was less than 20%, and the average corrosion depth of the coating film damage portions was less than 0.25 mm. The wires A8, A10, and A11 contained A1 and an A1 oxide in appropriate amounts in terms of A1 equivalent, and thus a particularly good bead shape was obtained in vertical upward welding and overhead position welding. The wires A8 and A13 contained Bi in an appropriate amount, and thus exhibited excellent slag delamination.

Among the comparative examples, the wire B1 had a small $TiO_2$ equivalent. Accordingly, metal sagging occurred in vertical upward fillet welding and overhead fillet welding, and thus it was impossible to obtain a smooth bead. In addition, the wire B1 had a small amount of Mn, and thus the tensile strength of the deposited metal was low and the absorbed energy was low. Furthermore, since the wire B1 had a large amount of B, crater cracking occurred.

The wire B2 had a large $TiO_2$ equivalent. Accordingly, a poor bead shape was obtained in horizontal fillet welding, and slag inclusion occurred in the X-ray inspection. In addition, the wire B2 had a small amount of C, and thus

EP 3 778 112 B1

the tensile strength and the absorbed energy of the deposited metal were low.

The wire B3 had a small $SiO_2$ equivalent. Accordingly, a poor bead shape was obtained in horizontal fillet welding. In addition, the wire B3 had a large amount of Mn, and thus the deposited metal had a high tensile strength and low absorbed energy.

The wire B4 had a large $SiO_2$ equivalent. Accordingly, metal sagging occurred in vertical upward fillet welding and overhead fillet welding, and thus it was impossible to obtain a smooth bead. In addition, in the wire B4, the absorbed energy of the deposited metal was low. Furthermore, the wire B4 had a small amount of Sn, and thus the delamination/swelling area ratio of the deposited metal was high, and the average corrosion depth of the coating film damage portions was also large.

The wire B5 had a small $ZrO_2$ equivalent. Accordingly, a poor bead shape was obtained in fillet welding in all positions evaluated. In addition, the wire B5 had a small amount of Si, and thus the absorbed energy of the deposited metal was low.

The wire B6 had a large $ZrO_2$ equivalent. Accordingly, a poor bead shape was obtained in fillet welding in all positions evaluated. In addition, the wire B6 had a small amount of Mg, and thus the absorbed energy of the deposited metal was low.

The wire B7 had a large amount of Si. Accordingly, the deposited metal had a high tensile strength and low absorbed energy. In addition, in the wire B7, the sum of the $Na_2O$ equivalent and the $K_2O$ equivalent was small, and thus a poor bead shape was obtained in horizontal fillet welding, and the amount of spatters was large.

The wire B8 had a large amount of Mg. Accordingly, a poor bead shape was obtained in fillet welding in all positions evaluated, and the amount of spatters was large. In addition, the wire B8 had a large amount of Sn, and thus the absorbed energy of the deposited metal was low.

In the wire B9, the sum of the $Na_2O$ equivalent and the $K_2O$ equivalent was large, and thus a poor bead shape was obtained in fillet welding in all positions evaluated. In addition, in the wire B9, the Bi equivalent of Bi and the Bi oxide in total was large, and thus crater cracking occurred.

The wire B10 had a large F equivalent. Accordingly, a poor bead shape was obtained in fillet welding in all positions evaluated. In addition, the wire B10 had a large amount of Cn, and thus the absorbed energy of the deposited metal was low.

The wire B11 had a small F equivalent. Accordingly, a poor bead shape was obtained in horizontal fillet welding. In addition, the wire B11 had a large amount of Mo, and thus the deposited metal had a high tensile strength and low absorbed energy. Furthermore, the wire B11 was poor in coating film adhesion due to an insufficient index X (that is, Sn+Sb>Mo+W was not satisfied).

The wire B12 had a small amount of C. Accordingly, the deposited metal had a low tensile strength and low absorbed energy. In addition, in the wire B12, the Al equivalent of Al and $Al_2O_3$ in total was large, and thus a poor bead shape was obtained in horizontal fillet welding, and slag inclusion occurred in the X-ray inspection.

The wire B13 had a small $SiO_2$ equivalent. Accordingly, a poor bead shape was obtained in horizontal fillet welding. In addition, the wire B13 had a large amount of Ni, and thus crater cracking occurred.

The wire B14 had a small amount of Sn. Accordingly, the delamination/swelling area ratio of the deposited metal was high, and the average corrosion depth of the coating film damage portions was also large. In addition, the wire B14 had a large amount of Ti, and thus the amount of spatters was large, and the slag delamination was poor. Furthermore, in the wire B14, the absorbed energy of the deposited metal was low.

The wire B15 had a large amount of C. Accordingly, the deposited metal had a high tensile strength and low absorbed energy. In addition, in the wire B15, crater cracking occurred.

[Brief Description of the Reference Symbols]

    1: parent material (steel)
    2: deposited metal
    3: position of corrosion test piece
    4: cross cut
    5: corrosion test piece
    10: flux-cored wire
    11: steel sheath
    12: flux
    13: steel sheet
    14: seam
    15: weld part

**Claims**

1. A method of manufacturing a flux-cored wire in which an inside of a steel sheath is filled with a flux, the method comprising:

   filling an inside of a steel sheet with the flux while forming the steel sheet into a cylindrical shape;
   joining both ends of the steel sheet to form a steel pipe; and
   rolling and annealing the steel pipe to obtain the flux-cored wire,
   wherein a chemical composition of the flux-cored wire includes, by mass% with respect to a total mass of the flux-cored wire,

   C: 0.03% to 0.12%,
   Si: 0.20% to 0.85%,
   Mn: 1.50% to 3.20%,
   P: 0.020% or less,
   S: 0.020% or less,
   Cu: 0% to 0.70%,
   Sn: 0.05% to 0.40%,
   Mg: 0.05% to 0.70%,
   a Ti oxide: 4.60% to 7.00% in terms of $TiO_2$ equivalent,
   a Si oxide: 0.20% to 0.90% in terms of $SiO_2$ equivalent,
   a Zr oxide: 0.10% to 0.70% in terms of $ZrO_2$ equivalent,
   Ni: 0% to 3.00%,
   Ti: 0% to 0.50%,
   B: 0% to 0.010%,
   Mo: 0% to 0.40%,
   W: 0% to 0.200%,
   Cr: 0% to 0.500%,
   Nb: 0% to 0.300%,
   V: 0% to 0.300%,
   N: 0% to 0.008%,
   Ca: 0% to 0.0050%,
   REM: 0% to 0.0050%,
   Sb: 0% to 0.005%,
   a Fe oxide: 0% to 2.50% in terms of FeO equivalent,
   a total of Al and an Al oxide: 0% to 0.60% in total in terms of Al equivalent,
   a total of Bi and a Bi oxide: 0% to 0.035% in total in terms of Bi equivalent,
   a Na compound and a K compound: 0.05% to 0.40% in terms of sum of $Na_2O$ equivalent and $K_2O$ equivalent,
   a fluorine compound: 0.02% to 0.25% in terms of F equivalent, and
   a remainder: Fe and impurities, and

   a Sn content, a Sb content, a W content, and a Mo content satisfy Expression 1:

$$Sn+Sb>Mo+W: \text{Expression 1}$$

   each element symbol in Expression 1 represents an amount of an element related to the element symbol by mass% with respect to the total mass of the flux-cored wire.

2. The method of manufacturing a flux-cored wire according to claim 1,
   wherein the chemical composition of the flux-cored wire includes, by mass% with respect to the total mass of the flux-cored wire,

   W: 0% to 0.010%, and
   Mo: 0% to 0.04%.

3. The method of manufacturing a flux-cored wire according to claim 1 or 2,

wherein the chemical composition of the flux-cored wire includes, by mass% with respect to the total mass of the flux-cored wire,
Cu: 0.05% to 0.70%.

4. The method of manufacturing a flux-cored wire according to any one of claims 1 to 3,

   wherein the chemical composition of the flux-cored wire satisfies one or more of the following, by mass% with respect to the total mass of the flux-cored wire,
   Ni: 0.10% to 3.00%,
   Ti: 0.03% to 0.50%, and
   B: 0.002% to 0.010%.

5. The method of manufacturing a flux-cored wire according to any one of claims 1 to 4,
   wherein the joining is caulking.

6. The method of manufacturing a flux-cored wire according to any one of claims 1 to 4,
   wherein the joining is welding.

7. A flux-cored wire manufactured by the method of manufacturing a flux-cored wire according to any one of claims 1 to 6.

8. A method of manufacturing a welded joint, comprising:
   welding using a flux-cored wire manufactured by the method of manufacturing a flux-cored wire according to any one of claims 1 to 6.

**Patentansprüche**

1. Ein Verfahren zur Herstellung eines Fülldrahts, bei dem ein Inneres eines Stahlmantels mit einem Flussmittel gefüllt ist, wobei das Verfahren umfasst:

   Füllen eines Inneres eines Stahlblechs mit dem Flussmittel, während das Stahlblech in eine zylindrische Form gebracht wird;
   Verbinden beider Enden des Stahlblechs, um ein Stahlrohr zu bilden; und
   Walzen und Glühen des Stahlrohrs, um den Fülldraht zu erhalten,
   wobei eine chemische Zusammensetzung des Fülldrahts in Massen-%, bezogen auf eine Gesamtmasse des Fülldrahts:

   C: 0,03% bis 0,12%,
   Si: 0,20% bis 0,85%,
   Mn: 1,50% bis 3,20%,
   P: 0,020% oder weniger,
   S: 0,020% oder weniger,
   Cu: 0% bis 0,70%,
   Sn: 0,05% bis 0,40%,
   Mg: 0,05% bis 0,70%,
   ein Ti-Oxid: 4,60% bis 7,00%, ausgedrückt als $TiO_2$-Äquivalent,
   ein Si-Oxid: 0,20% bis 0,90%, ausgedrückt als $SiO_2$-Äquivalent,
   ein Zr-Oxid: 0,10% bis 0,70%, ausgedrückt als $ZrO_2$-Äquivalent,
   Ni: 0% bis 3,00%,
   Ti: 0% bis 0,50%,
   B: 0% bis 0,010%,
   Mo: 0% bis 0,40%,
   W: 0% bis 0,200%,
   Cr: 0% bis 0,500%,
   Nb: 0% bis 0,300%,
   V: 0% bis 0,300%,
   N: 0% bis 0,008%,
   Ca: 0% bis 0,0050%,

Seltenerdmetalle: 0% bis 0,0050%,
Sb: 0% bis 0,005%,
ein Fe-Oxid: 0% bis 2,50%, ausgedrückt als FeO-Äquivalent,
eine Gesamtheit von Al und einem Al-Oxid: insgesamt 0% bis 0,60%, ausgedrückt als Al-Äquivalent,
eine Gesamtheit von Bi und einem Bi-Oxid: insgesamt 0% bis 0,035%, ausgedrückt als Bi-Äquivalent,
eine Na-Verbindung und eine K-Verbindung: 0,05% bis 0,40%, ausgedrückt als Summe von $Na_2O$-Äquivalent und $K_2O$-Äquivalent,
eine Fluorverbindung: 0,02% bis 0,25%, ausgedrückt als F-Äquivalent, und
einen Rest: Fe und Verunreinigungen
beinhaltet und
ein Sn-Gehalt, ein Sb-Gehalt, ein W-Gehalt und ein Mo-Gehalt Ausdruck 1 erfüllen:

$$Sn+Sb>Mo+W: Ausdruck\ 1$$

jedes Elementsymbol in Ausdruck 1 eine Menge eines Elements, das mit dem Elementsymbol in Verbindung steht, in Massen-%, bezogen auf die Gesamtmasse des Fülldrahts, darstellt.

2. Das Verfahren zur Herstellung eines Fülldrahts nach Anspruch 1,

wobei die chemische Zusammensetzung des Fülldrahts in Massen-%, bezogen auf die Gesamtmasse des Fülldrahts,
W: 0% bis 0,010% und
Mo: 0% bis 0,04%
beinhaltet.

3. Das Verfahren zur Herstellung eines Fülldrahts nach Anspruch 1 oder 2,

wobei die chemische Zusammensetzung des Fülldrahts in Massen-%, bezogen auf die Gesamtmasse des Fülldrahts,
Cu: 0,05% bis 0,70%
beinhaltet.

4. Das Verfahren zur Herstellung eines Fülldrahts nach einem der Ansprüche 1 bis 3, wobei die chemische Zusammensetzung des Fülldrahts in Massen-%, bezogen auf die Gesamtmenge des Fülldrahts, eine oder mehrere der Folgenden erfüllt:

Ni: 0,10% bis 3,00%,
Ti: 0,03% bis 0,50% und
B: 0,002% bis 0,010%.

5. Das Verfahren zur Herstellung eines Fülldrahts nach einem der Ansprüche 1 bis 4, wobei das Verbinden Caulking ist.

6. Das Verfahren zur Herstellung eines Fülldrahts nach einem der Ansprüche 1 bis 4, wobei das Verbinden Schweißen ist.

7. Ein Fülldraht, hergestellt durch das Verfahren zur Herstellung eines Fülldrahts nach einem der Ansprüche 1 bis 6.

8. Ein Verfahren zur Herstellung einer Schweißverbindung, umfassend:
Schweißen unter Verwendung eines Fülldrahts, hergestellt durch das Verfahren zur Herstellung eines Fülldrahts nach einem der Ansprüche 1 bis 6.

**Revendications**

1. Méthode de fabrication d'un fil fourré dans lequel un intérieur d'une gaine en acier est rempli d'un fondant, la méthode comprenant :

le remplissage d'un intérieur d'une tôle en acier avec le fondant pendant que la tôle en acier est mise sous une forme cylindrique ;

la jonction des deux extrémités de la tôle en acier pour former un tuyau en acier ; et

le laminage et le recuit du tuyau en acier pour que soit obtenu le fil fourré,

dans laquelle la composition chimique du fil fourré contient, en % en masse par rapport à la masse totale du fil fourré,

C : 0,03 % à 0,12%,

Si : 0,20 % à 0,85 %,

Mn : 1,50 % à 3,20 %,

P : 0,020 % ou moins,

S : 0,020 % ou moins,

Cu : 0 % à 0,70 %,

Sn : 0,05 % à 0,40 %,

Mg : 0,05 % à 0,70 %,

oxyde de Ti : 4,60 % à 7,00 % en termes d'équivalent de $TiO_2$,

oxyde de Si : 0,20 % à 0,90 % en termes d'équivalent de $SiO_2$,

oxyde de Zr : 0,10 % à 0,70 % en termes d'équivalent de $ZrO_2$,

Ni : 0 % à 3,00 %,

Ti : 0 % à 0,50 %,

B : 0 % à 0,010 %,

Mo : 0 % à 0,40 %,

W : 0 % à 0,200 %,

Cr : 0 % à 0,500 %,

Nb : 0 % à 0,300 %,

V : 0 % à 0,300 %,

N : 0 % à 0,008 %,

Ca : 0 % à 0,0050 %,

REM (éléments des terres rares) : 0 % à 0,0050 %,

Sb : 0 % à 0,005 %,

un oxyde de Fe : 0 % à 2,50 % en termes d'équivalent de FeO,

un total d'Al et d'un oxyde de Al : 0 % à 0,60 % au total en termes d'équivalent d'Al,

un total de Bi et d'un oxyde de Bi : 0 % à 0,035 % au total en termes d'équivalent de Bi,

un composé Na et un composé K : 0,05 % à 0,40 % en termes de la somme d'équivalent de $Na_2O$ et d'équivalent de $K_2O$,

un composé fluor : 0,02 % à 0,25 % en termes d'équivalent de F, et

le reste : Fe et impuretés, et

une teneur en Sn, une teneur en Sb, une teneur en W et une teneur en Mo satisfont à l'Expression 1 :

$$Sn + Sb > Mo + W : Expression\ 1$$

chaque symbole d'élément dans l'Expression 1 représente la quantité d'un élément en relation avec le symbole de l'élément en % en masse par rapport à la masse totale du fil fourré.

2. Méthode de fabrication d'un fil fourré selon la revendication 1, dans laquelle la composition chimique du fil fourré contient, en % en masse par rapport à la masse totale du fil fourré,

W : 0 % à 0,010 %, et

Mo : 0 % à 0,04 %.

3. Méthode de fabrication d'un fil fourré selon la revendication 1 ou 2, dans laquelle la composition chimique du fil fourré contient, en % en masse par rapport à la masse totale du fil fourré,

Cu : 0,05 % à 0,70 %.

4. Méthode de fabrication d'un fil fourré selon l'une quelconque des revendications 1 à 3, dans laquelle la composition chimique du fil fourré satisfait à une ou plusieurs des conditions suivantes, en % en masse par rapport à la masse totale du fil fourré,

Ni : 0,10 % à 3,00 %,
Ti : 0,03 % à 0,50 %, et
B : 0,002 % à 0,010%.

5.  Méthode de fabrication d'un fil fourré selon l'une quelconque des revendications 1 à 4, dans laquelle la jonction est un calfatage.

6.  Méthode de fabrication d'un fil fourré selon l'une quelconque des revendications 1 à 4, dans laquelle la jonction est un soudage.

7.  Fil fourré fabriqué par la méthode de fabrication d'un fil fourré selon l'une quelconque des revendications 1 à 6.

8.  Méthode de fabrication d'un joint soudé, comprenant :
    un soudage utilisant un fil fourré fabriqué par la méthode de fabrication d'un fil fourré selon l'une quelconque des revendications 1 à 6.

# FIG. 1

# FIG. 2

# FIG. 3

WET STAGE

50°C, 100%RH, 6 HOURS

SALT APPLICA-TION STAGE

ROOM TEMPERATURE, 15 MINUTES
SALINE SOLUTION:
0.5%NaCl,0.1%CaCl$_2$,0.075%NaHCO$_3$,pH8

DRY STAGE

60°C, 50%RH, 17.75 HOURS

# FIG. 4

# FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008163374 A
- JP 2007262555 A
- JP 2013151001 A
- JP 2000288781 A
- JP 2013226577 A